# EUROPEAN PATENT APPLICATION

(11) **EP 4 199 605 A1**
(43) Date of publication of application: **21.06.2023**
(21) Application number: 21857657.7
(22) Date of filing: 17.08.2021
(51) Int. Cl.: H04W 52/02

(54) **TRANSMISSION CONTROL METHOD AND APPARATUS, AND RELATED DEVICE**

(30) Priority: 17.08.2020 CN 202010827367
(71) Applicant: Vivo Mobile Communication Co., Ltd., Dongguan, Guangdong 523863 (CN)
(72) Inventor: LIU, Siqi, Dongguan, Guangdong 523863 (CN); JI, Zichao, Dongguan, Guangdong 523863 (CN); PENG, Shuyan, Dongguan, Guangdong 523863 (CN)
(74) Representative: Murgitroyd & Company
(86) International application number: PCT/CN2021/112959
(87) International publication number: WO 2022/037564

(57) **Abstract**

Embodiments of this application disclose a transmission control method and apparatus, and a related device. The method includes: determining a first resource; and receiving power saving information based on the first resource, where the power saving information is used to instruct a target device to perform a target operation on a target resource, the target device includes at least one of a first device and a second device, the target operation includes wakeup, sleep, activation or deactivation, and the target resource includes a sidelink resource.

## Description

### CROSS-REFERENCE TO RELATED APPLICATION

This application claims priority to Chinese Patent Application No. 202010827367.6, filed on August 17, 2020 in China, which is incorporated herein by reference in its entirety.

### TECHNICAL FIELD

This application pertains to the field of communications technologies, and in particular, relates to a transmission control method and apparatus, and a related device.

### BACKGROUND

With development of communications technologies, sidelink (Sidelink, SL) transmission is widely applied. For example, communication may be implemented between a mobile phone and user equipment such as a smart home by using an SL channel. To reduce a power loss, a discontinuous reception (Discontinuous Reception, DRX) mechanism is introduced to limit a transmission time of an SL or a personal Internet of Things (personal Internet of Things, PIOT).

The user equipment needs to maintain an active state within on duration (on duration) for transmission. This may force the user equipment to wake up in the on duration, so that power consumption of the user equipment is relatively high.

### SUMMARY

Embodiments of this application provide a transmission control method and apparatus, and a related device, to resolve a problem that power consumption of user equipment is relatively high.

According to a first aspect, a transmission control method is provided, performed by a first device and including:
determining a first resource; and
receiving power saving information based on the first resource, where
the power saving information is used to instruct a target device to perform a target operation on a target resource, the target device includes at least one of the first device and a second device, the target operation includes wakeup, sleep, activation or deactivation, and the target resource includes a sidelink resource.

According to a second aspect, a transmission control method is provided, performed by a third device and including:
determining a first resource; and
sending power saving information based on the first resource, where
the power saving information is used to instruct a target device to perform a target operation on a target resource, the target device includes at least one of a first device and a second device, the target operation includes wakeup, sleep, activation or deactivation, the target resource includes a sidelink resource, and the first device is a device that receives the power saving information.

According to a third aspect, a transmission control apparatus is provided, including:
a first determining module, configured to determine a first resource; and
a receiving module, configured to receive power saving information based on the first resource, where
the power saving information is used to instruct a target device to perform a target operation on a target resource, the target device includes at least one of the first device and a second device, the target operation includes wakeup, sleep, activation or deactivation, and the target resource includes a sidelink resource.

According to a fourth aspect, a transmission control apparatus is provided, including:
a second determining module, configured to determine a first resource; and
a sending module, configured to send power saving information based on the first resource, where
the power saving information is used to instruct a target device to perform a target operation on a target resource, the target device includes at least one of a first device and a second device, the target operation includes wakeup, sleep, activation or deactivation, the target resource includes a sidelink resource, and the first device is a device that receives the power saving information.

According to a fifth aspect, a communications device is provided. The communications device includes a processor, a memory, and a program or an instruction stored in the memory and executable on the processor, where when the program or the instruction is executed by the processor, the steps of the method in the first aspect are implemented, or the steps of the method in the second aspect are implemented.

According to a sixth aspect, a readable storage medium is provided. The readable storage medium stores a program or an instruction, and when the program or the instruction is executed by a processor, the steps of the method in the first aspect or the steps of the method in the second aspect are implemented.

According to a seventh aspect, an embodiment of this application provides a chip. The chip includes a processor and a communications interface, the communications interface is coupled to the processor, and the processor is configured to execute a program or an instruction of a network device to implement the method in the second aspect.

In the embodiments of this application, a first resource is determined; and power saving information is received based on the first resource, where the power saving information is used to instruct a target device to perform a target operation on a target resource, the target device includes at least one of the first device and a second device, the target operation includes wakeup, sleep, activation or deactivation, and the target resource includes a sidelink resource. The target device is dynamically instructed by using the power saving information to perform the target operation on the target resource. In this way, a wake-up state and a sleep state of user equipment can be flexibly controlled, thereby reducing a power loss of the user equipment.

### BRIEF DESCRIPTION OF DRAWINGS

FIG. 1 is a structural diagram of a network system to which the embodiments of this application can be applied;
FIG. 2 is a flowchart of a transmission control method according to an embodiment of this application;
FIG. 3 is a first example diagram of an indication of power saving information in a transmission control method according to an embodiment of this application;
FIG. 4 is a second example diagram of an indication of power saving information in a transmission control method according to an embodiment of this application;
FIG. 5 is a third example diagram of an indication of power saving information in a transmission control method according to an embodiment of this application;
FIG. 6 is a fourth example diagram of an indication of power saving information in a transmission control method according to an embodiment of this application;
FIG. 7 is a fifth example diagram of an indication of power saving information in a transmission control method according to an embodiment of this application;
FIG. 8 is a flowchart of another transmission control method according to an embodiment of this application;
FIG. 9 is a structural diagram of a transmission control apparatus according to an embodiment of this application;
FIG. 10 is a structural diagram of another transmission control apparatus according to an embodiment of this application;
FIG. 11 is a structural diagram of a communications device according to an embodiment of this application; and
FIG. 12 is a structural diagram of another communications device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects but do not describe a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, in the specification and the claims, "and/or" represents at least one of connected objects, the character "/" generally represents an "and/or" relationship between associated objects, and "()" represents a specific explanation of the above Chinese technology, or an optional feature. For example, that A (meeting a preset condition) is used to perform an operation may be understood as that all A is used to perform an operation, and A meeting the preset condition is used to perform an operation.

It should be noted that, the technologies described in the embodiments of this application are not limited to a Long Term Evolution (Long Term Evolution, LTE)/LTE-Advanced (LTE-Advanced, LTE-A) system, and can also be used in other wireless communications systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-Carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, the following descriptions describe a new radio (New Radio, NR) system for example purposes, and NR terms are used in most of the following descriptions, although these technologies can also be applied to an application other than an NR system application, for example, a 6th generation (6th Generation, 6G) communications system.

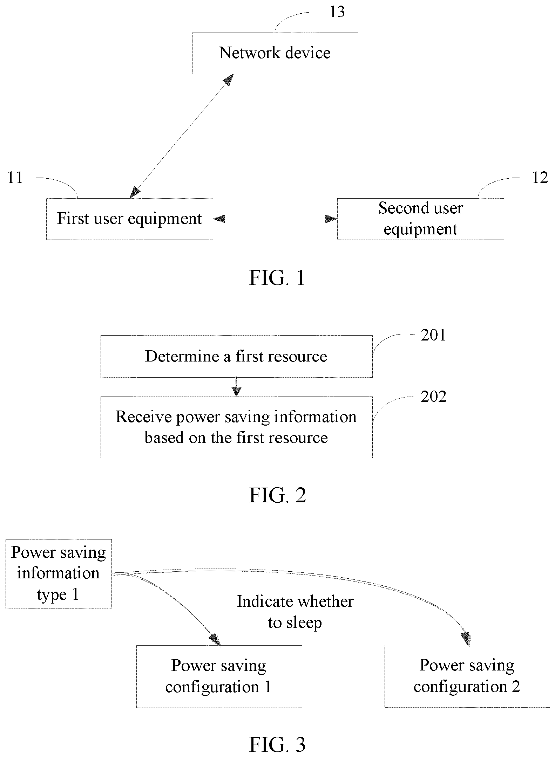

FIG. 1 is a block diagram of a wireless communications system to which embodiments of this application can be applied. The wireless communications system includes first user equipment 11, second user equipment 12, and a network device 13. The first user equipment 11 and the second user equipment 12 may also be referred to as a terminal device or user equipment (User Equipment, UE). The user equipment may be a terminal side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (Vehicle User Equipment, VLTE), or pedestrian user equipment (pedestrian user equipment, PUE). The wearable device includes a bracelet, a headset, glasses, and the like. It should be noted that a specific type of the user equipment is not limited in the embodiments of this application. The network device 12 may be a base station or a core network. The base station may be referred to as a NodeB, an evolved NodeB, an access point, a base transceiver station (Base Transceiver Station BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

For ease of understanding, the following describes some content in the embodiments of this application.

### I. DRX mechanism

In both an LTE system and a new radio (New Radio, NR) system, a DRX mechanism is introduced, and a range of DRX on and a range of DRX off are configured to save power of LTE. A period of on duration is the range of DRX on. If the LTE is not scheduled in the period of on duration, the UE enters an off range of a DRX cycle.

When DRX is configured, parameters such as an on duration timer (onDurationTimer), a DRX inactivity timer (drx-InactivityTimer), a DRX retransmission timer (drx-RetransmissionTimer), and a long DRX cycle start offset (longDRX-CycleStartOffset) are configured.

After DRX is configured is configured for the UE, if decoding of sent or received data fails, the LTE needs to enter an active time to monitor a control channel, and wait for retransmission scheduled by a network.

In the period of onDuration, if the LTE is scheduled and receives data in a slot (slot), it is likely that the UE continues to be scheduled in next several slots. Therefore, whenever the UE is scheduled to initially transmit data, the timer drx-InactivityTimer is started or restarted, and the UE will remain in an active state until the timer expires.

For receiving of downlink data, after receiving downlink data transmission indicated by a physical downlink control channel (Physical Downlink Control Channel, PDCCH) and feeding back hybrid automatic repeat request (Hybrid Automatic Repeat Request, HARQ) information, the LTE starts a downlink backhaul timer (HARQ RTT (Round Trip Time) Timer) for a corresponding HARQ process. After the HARQ RTT timer expires, if data of the HARQ process is not successfully decoded, the LTE starts a drx-RetransmissionTimer, monitors a PDCCH, and waits for transmission.

For sending of uplink data, after receiving an uplink data transmission indicated by a PDCCH, the UE starts an uplink backhaul timer HARQ RTT Timer for a corresponding HARQ process. After the HARQ RTT timer expires, the UE starts an uplink retransmission timer (drx-ULRetransmissionTimer), enters an active state to monitor a PDCCH, and waits for transmission scheduled by a network.

### 2. SL transmission

DRX on an SL is semi-statically configured. A user needs to remain active within the on duration for transmission. The transmission includes SL receiving and/or SL sending. However, because an SL packet may be aperiodic or has a large period, the packet may not be well adapted to a DRX on/off cycle. As a result, in some on duration, a device may have no packet to be transmitted or may not receive scheduling signaling, and extra power consumption caused by forcing the user to wake up during the on duration needs to be avoided. Therefore, the transmission control method in this application is proposed.

### 3. Explanation of some technical terms

Duration in the embodiments of this application may be understood as a quantity of included resources in time domain, a quantity of measurable resources, a quantity of physical resources, and/or a quantity of logical resources.

A resource mentioned in the embodiments of this application includes a time domain resource and/or a frequency domain resource. The frequency domain resource may be one or more sub-channels or resource blocks (Resource Block, RB) or RB groups or interlace (interlace) or transmission combs (comb) (on one or more time domain resources). The time domain resource may be one or more symbols/slots (slot)/mini-slots (mini-slot)/milliseconds (ms)/subframes (subframe)/frames (frame)/periodicities (periodicity)/channel occupation times (Channel Occupancy Time, COT). The time domain resource is a physical time domain resource or a logical time domain resource. For example, a slot may be a physical slot or a logical slot. A time-frequency resource may be a single slot (single slot) resource that occupies X subchannels or RBs.

A measurable resource may be a (logical) resource within an active time (corresponding to receiving or sending), preferably an active time for receiving at least a control channel and/or a data channel, such as an active time for receiving a physical sidelink control channel (physical sidelink control channel, PSCCH) and/or a physical sidelink shared channel (Physical sidelink shared Channel, PSSCH).

A non-measurable resource may be a resource within an inactive time, preferably an inactive time for receiving at least a control channel and/or a data channel, such as an inactive time for receiving a PSCCH and/or a PSSCH.

A power saving configuration in the embodiments of this application may also be referred to as a power saving configuration pattern. For example, the power saving configuration may be an SL DRX configuration. The power saving configuration may also be referred to as a sensing configuration pattern. For example, the sensing configuration may be a partial sensing (partial sensing) configuration, or may be a full sensing (full sensing) configuration. In the embodiments of this application, the partial sensing is used as an example, but sensing is not limited to the partial sensing, and may also be the full sensing. The sensing configuration includes a sensing time and/or a selection time. The sensing time may also be referred to as a sensing window (sensing window). Certainly, this is not limited thereto. The selection time may also be referred to as a selection window (selection window). Certainly, this is not limited thereto.

Optionally, the power saving configuration may be used to affect or control sensing and/or transmission of a target object by a device, and the transmission is understood as receiving or sending. The target object may include at least one of the following: a control signal/channel, a data signal/channel, a reference signal, a feedback signal/channel, a request, a response message, and the like. For example, the target object includes but is not limited to sidelink control information (Sidelink Control Information, SCI), a physical sidelink shared channel (Physical Sidelink Shared Channel, PSSCH), a physical sidelink control channel (Physical Sidelink Control Channel, PSCCH), an SL reference signal (reference signal, RS), a physical sidelink feedback channel (Physical Sidelink Feedback Channel, PSFCH), a sidelink synchronization signal block (Sidelink-synchronization signal and PBCH Block, S-SSB), channel state information (Channel State Information, CSI), a connection establishment response, and the like. The SCI may include at least one of first phase SCI (1st stage SCI) and second phase SCI (2st stage SCI).

The power saving configuration in the embodiments of this application may be divided into an active time and/or an inactive time. The user measures, monitors, and/or transmits the target object within the active time, and does not measure, monitor, and/or transmit the target object within the inactive time.

The active time and the inactive time may be defined for the target object, that is, active times of different target objects may be the same or different, and inactive times of different target objects may be the same or different.

The active time and the inactive time may be defined for a transmission direction, that is, active times for sending and receiving may be the same or different, and inactive times for sending and receiving may be the same or different. Some target objects or transmission directions may only have an active time but have no inactive time.

For example, it is assumed that SCI can be sent at any time.

For example, receiving of control and/or data is limited to an active time of DRX, and control and/or data may be sent in an inactive time corresponding to receiving or an inactive time. Optionally, sending of control and/or data is limited to a selection window.

The active time includes at least one of on Duration (on Duration), an on duration timer (on duration timer), a DRX inactivity timer (drx-InactivityTimer), a DRX transmission timer (drx-RetransmissionTimer), a running time of T400, and a period of sl-LatencyBoundCSI-Report. The active time may also be interpreted as a time in which one or more or all signals and/or channels may be sent and/or received.

The inactive time includes at least one of off duration (off duration), a running time of a round trip time (Round Trip Time, RTT) timer, a non-partial sensing window part (for example, a part between two partial sensing windows or a disabled partial sensing window), or a non-sensing time.

With reference to the accompanying drawings, the transmission control method provided in the embodiments of this application is described in detail by using specific embodiments and application scenarios.

Referring to FIG. 2, FIG. 2 is a flowchart of a transmission control method according to an embodiment of this application.

The method is performed by a first device. As shown in FIG. 2, the method includes the following steps.

Step 201: determine a first resource.

Step 202: receive power saving information based on the first resource.

The power saving information is used to instruct a target device to perform a target operation on a target resource, the target device includes at least one of the first device and a second device, the target operation includes wakeup, sleep, activation or deactivation, and the target resource includes a sidelink resource.

It should be understood that the power saving information may be used to indicate a target operation of the first device that receives the power saving information, and/or indicate a target operation of the second device other than the first device that receives the power saving information. In other words, the power saving information is used to control or affect a target operation of user equipment that receives the power saving information, and/or control or affect a target operation of user equipment other than the first device that receives the power saving information. In an embodiment, when the power saving information is used to indicate the target operation performed by the second device on the target resource, the first device may perform the target operation. For example, the second device is scheduled to send data on the target resource. In this case, the power saving information may instruct the second device to perform an activation operation on the target resource. In this case, the first device may perform an activation operation correspondingly, so that normal transmission can be performed between the first device and the second device.

In this embodiment, the first device is a device that receives the power saving information. Optionally, the first device may send an SL resource, or may receive an SL resource, or may send an SL resource for a device, and may receive an SL resource for another device.

The second device is user equipment other than the first device. In an embodiment, the second device may be understood as a device related to the first device or a device for scheduling the first device to perform transmission. The device related to the first device may be understood as a device that has SL transmission with the first device or a device that sends the power saving information. In this embodiment, SL transmission may be understood as SL sending or SL receiving.

The first resource may be a resource determined through protocol stipulation, base station configuration, preconfiguration, user negotiation, scheduling of user equipment, and determining by user equipment.

It should be understood that the target resource may include only an SL resource, or may include an SL resource and a Uu resource. That is, the power saving information may control or affect only SL transmission, and may further control or affect Uu transmission.

Optionally, the wakeup may be understood as controlling the user equipment to wake up, the sleep may be understood as controlling the user equipment to enter a sleep state, the activation may be understood as activating one or more power saving configurations of the user equipment, and the deactivation may be understood as deactivating one or more power saving configurations of the user equipment, where the power saving configuration may be understood as a DRX configuration. Specifically, after the user equipment wakes up, the user equipment may send and/or receive a target object. After the user equipment sleeps, the user equipment does not send and/or receive the target object. After a power saving configuration of the user equipment is activated, the target object may be sent and/or received based on the power saving configuration. After a power saving configuration of the user equipment is deactivated, sending and/or receiving of the target object by the user equipment is not limited by the power saving configuration.

In this embodiment of this application, a first resource is determined; and power saving information is received based on the first resource, where the power saving information is used to instruct a target device to perform a target operation on a target resource, the target device includes at least one of the first device and a second device, the target operation includes wakeup, sleep, activation or deactivation, and the target resource includes a sidelink resource. The target device is dynamically instructed by using the power saving information to perform the target operation on the target resource. In this way, a wake-up state and a sleep state of user equipment can be flexibly controlled, thereby reducing a power loss of the user equipment.

Optionally, in an embodiment, the power saving information may include indication information, and the indication information is used to indicate the target operation, that is, the power saving information may explicitly indicate the target operation. In another embodiment, the power saving information may implicitly indicate the target operation. For example, the target operation may be implicitly indicated by using at least one of the following:
a candidate resource of the power saving information;
whether the power saving information is sensed;
whether the power saving information is received;
whether a measurement result of the power saving information meets a first preset condition;
whether a measurement result of the candidate resource of the power saving information meets the first preset condition;
the first resource;
whether a second preset condition is met; and
a preset parameter.

The candidate resource may be understood as a resource that may be used to carry the power saving information, and the first resource is a part of the candidate resource.

In this case, the first device may determine, based on the foregoing information, an operation indicated by the power saving information. That is, after the receiving power saving information based on the first resource, the method further includes any one of the following: determining the target operation according to a candidate resource of the power saving information;
determining the target operation according to whether the power saving information is sensed;
determining the target operation according to whether the power saving information is received;
determining the target operation according to whether a measurement result of the power saving information meets a first preset condition;
determining the target operation according to whether a measurement result of the candidate resource of the power saving information meets the first preset condition;
determining the target operation according to the first resource;
determining the target operation according to whether the target device meets a second preset condition; and
determining the target operation according to a preset parameter.

In this embodiment, for the candidate resource of the power saving information, it may be specified that different available resources correspond to different operations, so that a resource of a power saving signal can be received to determine an operation implicitly indicated by the power saving information.

For whether the power saving information is sensed, it may be specified that not sensing the power saving information may correspond to one or more operations, and sensing the power saving information may correspond to one or more operations. For example, not receiving the power saving information indicates disabling, deactivation, or wakeup by default, and after it is determined that the power saving information is received, enabling, activation, or sleep is correspondingly indicated. It should be understood that, in another example, a reverse setting may be further performed, which is not further limited herein. For example, if it is determined that the power saving information is received, disabling, deactivation, or wakeup is indicated in default, and not receiving the power saving information correspondingly indicates enabling, activation, or sleep. The following illustrations may be successively analogized to obtain reverse examples. Details are not described below.

For whether the measurement result of the power saving information meets the first preset condition and whether the measurement result of the candidate resource of the power saving information meets the first preset condition, one or more corresponding operations may be set when the first preset condition is met and one or more corresponding operations may be set when the first preset condition is not met. For example, being greater than a first threshold correspondingly indicates enabling, activation, or sleep, and being less than the first threshold correspondingly indicates disabling, deactivation, or wakeup; and belonging to a first threshold range correspondingly indicates enabling, activation, or sleep, and not belonging to the first threshold range corresponds to disabling, deactivation, or wakeup.

The determining the target operation according to the first resource may be understand as determining the target operation according to a channel, a signal, or the signaling corresponding to the first resource. It may be specified that the signal corresponds to one or more operations, the channel corresponds to one or more operations, and the signaling corresponds to one or more operations. The resource mentioned in the present invention may be understood as a channel, a signal, or signaling.

For whether the second preset condition is met, it may be specified that meeting the second preset condition corresponds to one or more operations, and not meeting the second preset condition corresponds to one or more operations.

For the preset parameter, it can be understood that different states or meanings corresponding to the preset parameter correspond to different operations, or it may be specified that different values of the preset parameter correspond to different operations, different value ranges correspond to different operations, or different quantization values of values correspond to different operations different operations. An implementation in which different states corresponding to the preset parameter correspond to different operations is being separately corresponding to different operations when the preset parameter corresponds to initial transmission and when the preset parameter corresponds to retransmission. An implementation in which different value ranges correspond to different operations is being corresponding to an operation 1 when a value belongs to a range 1 and being corresponding to an operation 2 when a value belongs to a range 2. A quantization value may be understood as that all values belonging to a specified range may be quantized into one value. It may be specified that all values of a preset parameter may be set divided into at least two ranges, that is, corresponding to at least two quantization values, and each quantization value corresponds to one or more operations.

Certainly, in another embodiment, it may be further specified that different conditions in the second preset condition correspond to different operations, and each condition corresponds to one or more operations.

Optionally, in an embodiment, the second preset condition may include at least one of the following: that the target device has geographic location information; that the target device has distance information; that a distance between the first device and the second device is within a preset distance range; that the target device is in a preset location; that the target device has a power saving configuration; that the target device supports a power saving configuration; that the target device is a device of a preset type; that the target device has a preset capability; that a moving speed of the target device is less than a preset value; that the target device is in a preset state; that the target device is associated with the preset parameter; that the target device has a power saving information configuration; and that the target device supports the power saving information.

In this embodiment of this application, the following setting may be performed for the second preset condition:
Cases that the target device has the distance information and has no distance information may correspond to different operations; cases that the distance between the first device and the second device is within the preset distance range and is not within the preset distance range correspond to different operations; cases that the target device is located in the preset location and is not located in the preset location correspond to different operations; cases that the target device has the power saving configuration and does not have the power saving configuration correspond to different operations; cases that the target device supports the power saving configuration and does not support the power saving configuration correspond to different operations; cases that the target device is the device of the preset type and is not the device of the preset type correspond to different operations, or different types correspond to different operations; and cases that the target device has the preset capability and does not have the preset capability correspond to different operations or different capabilities correspond to different operations.

Two different states that the moving speed of the target device is less than the preset value and is greater than or equal to the preset value correspond to different operations. For example, different mobility may correspond to different operations. Optionally, whether being low-speed or still user equipment may correspond to different operations. For example, when the user equipment is a low-speed or still device, the corresponding operation is enabling, activation, or sleep.

Cases that the target device is in the preset state and is not in the preset state correspond to different operations, or different preset states may correspond to different operations. The preset state may include at least one of the following: a low remaining power, startup, restart, breakdown, upgrade, link establishment, synchronization, and group establishment. For example, in an embodiment, when the device performs startup, restart, breakdown, upgrade, link establishment, synchronization, or group establishment, the corresponding operation is disabling, deactivation, or wakeup. In another embodiment, a low remaining power, a device fault, and/or a normal operation correspond/corresponds to enabling, activation, or sleep.

Cases that the target device has the power saving information configuration and does not have the power saving information configuration correspond to different operations, where the power saving information configuration is a related configuration used to transmit the power saving information, for example, may include a resource configuration.

Cases that the target device supports the power saving information and does not support the power saving information correspond to different operations. For example, when the target device supports the power saving information, the corresponding operation is enabling, activation, or sleep. That the target device supports the power saving information may be understood as at least one of the following: supporting receiving, supporting sending, support sensing, and being identifiable.

Cases that the target device is the device of the preset type and is not the device of the preset type correspond to different operations. For example, it may be specified that different user types may correspond to different operations, and it may be further specified that whether being a specific user type may correspond to different operations. For example, PUE, a home appliance, a scheduled user, or a wearable device corresponds to wakeup or activation.

Cases that the target device has the preset capability and does not have the preset capability correspond to different operations. For example, when the user equipment has an external power supply, the corresponding operation is disabling/deactivation/wakeup. When the user equipment has no external power supply, it is determined that the corresponding operation after the power saving information is received is enabling/activation/sleep.

Optionally, the first preset condition may be a condition for determining, based on the power saving information or a measurement result of the first resource, that the power saving information is received. Specifically, the first preset condition includes any one of the following: that N1 measurement results are greater than a first threshold, that N2 measurement results are less than a second threshold, that all N3 measurement results are in a first range, and that all N4 measurement results are outside a second range, where N1, N2, N3, and N4 are positive integers.

The N1 measurement results, the N2 measurement results, the N3 measurement results, and the N4 measurement results may be understood as continuous or discontinuous measurement results, or may be measurement results in a period of time. This is not further limited herein.

It should be understood that values of N1, N2, N3, N4, a first preset time period, the first threshold, the second threshold, a first preset range, and a second preset range that are corresponding to different operations may be different.

Optionally, in an embodiment, the power saving information is specifically used to instruct the target device to perform the target operation on the target resource in a power saving configuration.

In this embodiment, the power saving information may correspond to at least one power saving configuration. That is, the power saving information may control or affect a behavior of the user equipment in one or more power saving configurations.

Optionally, in an embodiment, the power saving information includes first power saving information, second power saving information, or third power saving information, where the first power saving information corresponds to at least one first-type power saving configuration, the second power saving information corresponds to at least one second-type power saving configuration, the third power saving information corresponds to at least one power saving configuration in target power saving configurations, and the target power saving configurations include the first-type power saving configuration and the second-type power saving configuration.

In this embodiment, the power saving information may have a plurality of different types. The first power saving information may be understood as power saving information corresponding to a power saving information type 1, the second power saving information may be understood as power saving information corresponding to a power saving information type 2, and the third power saving information may be understood as power saving information corresponding to a power saving information type 3.

The first-type power saving configuration may include at least one of the following power saving configurations: a dedicated power saving configuration, a connection-based power saving configuration, a power saving configuration including information about an associated device, a power saving configuration for unicast and/or multicast, and an extended or triggered or dynamic power saving configuration. The information about the associated device may be at least one of the quantity of associated devices, a location of the associated device, a group to which the associated device belongs, an interference state of the associated device, a power saving state of the associated device, a power consumption state of the associated device, and an active state of the associated device. For example, the first-type power saving configuration may include at least one of the following DRX configurations: dedicated SL DRX, connection-based DRX, SL DRX including information about an associated device, DRX for unicast and/or multicast, and extended or triggered or dynamic DRX.

The second-type power saving configuration may include at least one of the following power saving configurations: a common SL power saving configuration, a connectionless SL power saving configuration, an SL power saving configuration without information about an associated device, a power saving configuration for broadcast, a power saving configuration for multicast, and a semi-static or periodic power saving configuration. For example, the second-type power saving configuration may include at least one of the following DRX configurations: common SL DRX, connectionless SL DRX, SL DRX without information about an associated device, DRX for broadcast, DRX for multicast, and semi-static or periodic DRX.

The power saving information type 1 is used to control operations of user equipment in L1 power saving configurations corresponding to the power saving information, where the L1 power saving configurations may be a part or all of power saving configurations in the first-type power saving configuration.

The power saving information type 2 is used to control operations of user equipment in L2 power saving configurations corresponding to the power saving information, where the L2 power saving configurations may be a part or all of power saving configurations in the second-type power saving configuration.

The power saving information type 3 is used to control operations of a user equipment in L3 power saving configurations corresponding to the power saving information. The L3 power saving configurations may be understood as a part or all of power saving configurations configured for the user equipment.

In this embodiment, a power saving information type does not correspond to a power saving configuration type.

Optionally, in an embodiment, the power saving information corresponds to at least one of the first-type power saving configuration and the second-type power saving configuration.

Optionally, at least power saving information corresponding to the first-type power saving configuration is the power saving information type 1 or the power saving information type 3. For example, power saving information corresponding to the first-type power saving configuration is the type 1, that is, the power saving information can be used to control only an operation of the user in the first-type power saving configuration. Mainly considering that the first-type power saving configuration may be specially established for a unicast connection, the power saving information corresponding to the first-type power saving configuration cannot control or affect a power saving configuration of another type. For example, power saving information corresponding to the dedicated DRX is the type 1, that is, the power saving information can be used to control only an operation of the user in the dedicated DRX. Mainly considering that the dedicated DRX may be specially established for a unicast connection, the power saving information corresponding to the dedicated DRX cannot control or affect other DRX.

Optionally, at least power saving information corresponding to the second-type power saving configuration is the power saving information type 2 or the power saving information type 3. For example, power saving information corresponding to the second-type power saving configuration is the type 3, that is, the power saving information can be used to control operations of the user in the second-type power saving configuration and the first-type power saving configuration. For example, power saving information corresponding to the common DRX is the type 3, that is, the power saving information can be used to control operations of the user in the common DRX and the dedicated DRX.

Optionally, in an embodiment, power saving information corresponding to power saving configurations of different types meets at least one of the following:
that types of the power saving information are different;
that resources of the power saving information are different;
that manners of determining the resources of the power saving information are different; and
that sequences, channels, signals, or signaling of the resources of the power saving information is different.

The types of the power saving information may include a power saving information type 1, a power saving information type 2, and a power saving information type 3, that is, the types corresponding to the first power saving information, the second power saving information, and the third power saving information.

A determining manner corresponding to the resource of the power saving information may be understood as a method for determining the resource of the power saving information, for example, the resource of the power saving information may be determined according to the preset parameter. Values of different association parameters/ranges of values of associated parameters/quantization values of values of associated parameters correspond to different (one or more) time domain/frequency domain/code domain resources/content that may be used to transmit the power saving information, so that the resource of the power saving information can be determined according to an obtained association parameter. For another example, the resource corresponding to the power saving information may be determined according to information 1 or information 2, where the information 1 corresponds to one or more power saving configurations, and the information 2 corresponds to one or more power saving configurations.

Optionally, in an embodiment, after the receiving power saving information based on the first resource, the method further includes at least one of the following:
before a next piece of power saving information is received or sent, performing the target operation indicated by the currently received power saving information; and
performing, within a first preset time period, the target operation indicated by the currently received power saving information. That the target operation indicated by the currently received power saving information is performed before the next piece of power saving information is received or sent may be understood as: before a next piece of power saving information indicating a first operation is transmitted, the target operation indicated by the currently received power saving information is performed, where the first operation and the target operation are different.

Optionally, the performing the target operation includes any one of the following:
performing the target operation within a first preset time period;
performing the target operation within an inactive time in a power saving configuration corresponding to the power saving information and/or an active time in the power saving configuration corresponding to the power saving information; and
performing the target operation within the inactive time in the power saving configuration corresponding to the power saving information.

The performing the target operation specifically includes any one of the following:
sending or receiving the target object;
sending or receiving the target object within the first preset time period;
not sending or receiving the target object;
not sending or receiving the target object within the first preset time period;
not transmitting the target object within the inactive time in the power saving configuration corresponding to the power saving information, and/or transmitting the target object within the active time in the power saving configuration corresponding to the power saving information; and
transmitting the target object within the inactive time in the power saving configuration corresponding to the power saving information.

It should be understood that different target operations may be performed within the active time and the inactive time. For example, receiving and/or sending within the active time, and sending within the inactive time. For another example, sleep within the active time, and wakeup within the inactive time.

In this embodiment, that an operation is control based on the power saving information includes at least one of the following cases:
Case 1: the first device receives the power saving information, where the power saving information is used to control an operation of user equipment 1 or is used to control an operation of user equipment 1 in the power saving configuration.
Case 2: including case 2-1 and/or case 2-2. Case 2-1: a third device sends the power saving information, where the power saving information is used to control an operation of the first device or is used to control an operation of the first device in the power saving configuration. Case 2-2: a third device sends the power saving information, which affects an operation of the third device or affects an operation of the third device in the power saving configuration. Optionally, the third device is user equipment 2, and the third device is a device that sends the power saving information.
Case 3: a base station/scheduling device sends the power saving information to target user equipment, where the target user equipment includes user equipment 1 and/or user equipment 2, and the power saving information is used to control an operation of the target user equipment or is used to control an operation of the target user equipment in the power saving configuration.

It should be noted that target objects corresponding to different target operations may be the same or different. This is not further limited herein.

That the power saving information is used to control or affect an operation may include at least one of the following:
Operation 1: stay inactive/sleep. For example, before the next piece of power saving information is received or sent, inactivity/sleep is maintained, or before the next piece of power saving information that is used to control different operations (for example, an operation 2) is transmitted, inactivity/sleep is maintained, or inactivity/sleep is maintained within the first preset time period.

That inactivity/sleep is maintained within the first preset time period may be understood that the power saving information is used to instruct the user to stay inactive/sleep within the first preset time.

Optionally, the power saving information may be used to control or affect one or more resource pools, bandwidth parts (Bandwidth Part, BWP), or carriers.

Optionally, controlled/affected user equipment does not perform corresponding transmission on the target object. For example, the user equipment 1 does not perform receiving, and/or the user equipment 2 does not perform sending.

Optionally, controlled/affected user equipment does not perform corresponding transmission on the target object within the first preset time period. For example, the user equipment 1 does not perform receiving, and/or the user equipment 2 does not perform sending.

Optionally, controlled/affected user equipment is switched to a first resource pool, BWP, or carrier.

Optionally, the user equipment does not perform corresponding transmission on the target object on the first resource pool, BWP, or carrier within the first preset time period. For example, the user equipment 1 does not perform receiving, and/or the user equipment 2 does not perform sending. The target object may include at least one of control and data.

Operation 2: wake up/stay active/not sleep. For example, before the next piece of power saving information is received or sent, the user equipment is waked up/stays active/does not sleep, or before the next piece of power saving information that is used to control different operations (for example, an operation 1) is transmitted, the user equipment is waked up/stays active/does not sleep, or is waked up/stays active/does not sleep in the first preset time period.

Being waked up/staying active/not sleeping in the first preset time period may be understood that the power saving information is used to instruct the user to waked up/stay active/not sleep in the first preset time. That is, the user equipment may perform normal transmission within the first preset time period.

Optionally, controlled/affected user equipment may perform corresponding transmission on the target object. For example, the user equipment 1 performs receiving, and/or the user equipment 2 performs sending.

Optionally, controlled/affected user equipment may perform corresponding transmission on the target object within the first preset time period. For example, the user equipment 1 performs receiving, and/or the user equipment 2 performs sending.

Optionally, controlled/affected user equipment is switched to a second resource pool, BWP, or carrier.

Optionally, the user equipment performs corresponding transmission on the target object on the second resource pool, BWP, or carrier within the first preset time period. For example, the user equipment 1 performs receiving, and/or the user equipment 2 performs sending.

Operation 3: activate/enable the power saving configuration, that is, the power saving information is used to activate/enable one or more power saving configurations. A specific operation includes at least one of the following:
that controlled/affected user equipment does not transmit a second target object within the inactive time corresponding to the power saving configuration corresponding to the power saving information; and
that controlled/affected user equipment transmits a first target object within the active time corresponding to the power saving configuration corresponding to the power saving information.

For example, the user equipment 1 performs receiving and/or the user equipment 2 performs sending within the active time; and the user equipment 1 does not perform receiving and/or the user equipment 2 does not perform sending within the inactive time.

Operation 4: deactivate/disable the power saving configuration, that is, the power saving information is used to deactivate/disable one or more power saving configurations. A specific operation includes at least one of the following:
that controlled/affected user equipment may transmit a second target object within the inactive time corresponding to the power saving configuration corresponding to the power saving information. For example, the user equipment 1 performs receiving, and/or the user equipment 2 performs sending.

It should be understood that target objects corresponding to the operation 1 and the operation 2 may be the same or different.

In this embodiment, the first preset time period corresponding to the operation 1 and the first preset time period corresponding to the operation 2 may be a same time length, or may be different time lengths. Optionally, the first preset time period includes at least one of the following defined time:
at least one time unit;
at least one active time in the power saving configuration; and
at least one inactive time in the power saving configuration.

The at least one time unit may be understood as one time unit, or at least two time units. The at least two time units may be continuous or discontinuous time units, and the discontinuous time units may be periodic or aperiodic time units. The time unit may include at least one of the following: a slot, a slot group, a mini-slot (mini-slot), a mini-slot group, a symbol, a symbol group, a subframe (subframe), a subframe group, a frame (frame), a frame group, preset duration, a channel occupancy time (channel occupancy time, COT), and a measurement window length. The measurement window length may include a channel busy ratio (Channel Busy Ratio, CBR) measurement window length or a channel occupancy ratio (Channel Occupancy Ratio, CR) measurement window length.

The preset duration is duration corresponding to at least one of the following: a periodicity of the candidate resource of the power saving information, a periodicity of the first resource, a periodicity of a synchronization resource, a periodicity of a discovery resource, a periodicity of a control resource, a periodicity of a data resource, a periodicity of a feedback resource, a periodicity of a measurement resource, a service periodicity, a periodicity of a data packet, a power saving configuration periodicity, a periodicity of a resource pool, a periodicity of a search space, a sensing step, a sensing periodicity, a sensing window length, a selection window length, a periodicity of a reference signal, and a reservation periodicity. A resource may be understood as a channel, a signal, or a signaling. For example, the periodicity of the discovery resource may be interpreted as a periodicity of a discovery channel, signal, or signaling.

The periodicity of the first resource may be understood as a periodicity of a signal, a channel, or signaling corresponding to the first resource. The periodicity of the synchronization resource may understand a periodicity of a synchronization signal, a synchronization channel, or synchronization signaling. The periodicity of the control resource may be understood as a periodicity of a control signal, a control channel, or control signaling. The periodicity of the feedback resource may be understood as a periodicity of a feedback signal, a feedback channel, or feedback signaling. The periodicity of the measurement resource may be understood as a periodicity of a measurement signal, a measurement channel, or measurement signaling. The sensing step may be understood as a step of a sensing window, the sensing periodicity may be understood as a periodicity of the sensing window, and the sensing step and the sensing periodicity may also be understood as time intervals of two possible sensing windows.

It should be understood that time lengths of first preset time periods corresponding to first resources for different power saving information or of different power saving information may be different. Optionally, in an embodiment, the power saving information is further used to indicate a transmission direction of at least one of the first device and the second device. In this embodiment, the first device and the second device may be understood as devices for performing SL transmission. That is, in this embodiment, the operation controlled/affected by the power saving information includes at least one of the following:
Operation 5: indicate a transmission direction of the user equipment 1.
Operation 6: indicate a transmission direction of the user equipment 2.

Optionally, a target object associated with the target operation includes any one of the following:
a first transmission object, where the first transmission object is a transmission object associated with at least one of a preset transmission, a preset connection, a first preset device, and a preset power saving configuration;
a second transmission object, where the second transmission object is a transmission object other than the first transmission object;
a third transmission object, where the third transmission object is any transmission object;
a fourth transmission object, where the fourth transmission object is associated with a preset parameter; and
a fifth transmission object, where the fifth transmission object is associated with preset information, where
the preset information includes at least one of content included in the power saving information, the first resource, and a resource that can be used for the power saving information.

For the first transmission object, in an embodiment, if the power saving information corresponds to the user equipment 1 and the user equipment 2, a power saving configuration is negotiated, for example, SL DRX, and the corresponding target object may be at least one of the following:
transmission of a connection used to negotiate or indicate the power saving configuration, such as control and/or data;
transmission corresponding to multicast transmission in a case that there is group information, such as control and/or data;
transmission with connected user equipment, such as control and/or data; for example, transmission between the user equipment 1 and the user equipment 2, for example, control and/or data; and
transmission of unicast corresponding to the power saving configuration, such as control and/or data.

The second transmission object, for example, may be at least one of the following:
connectionless transmission, such as control and/or data;
transmission corresponding to multicast transmission in a case that there is no group information, such as control and/or data;
transmission with a user who does not establish a connection, such as control and/or data; and
transmission corresponding to broadcast and/or multicast transmission, such as control and/or data.

The third transmission object, for example, may be understood as at least one of the following:
transmission over any connection and/or connectionless transmission, such as control and/or data;
transmission corresponding to multicast transmission in a case that there is group information and/or there is no group information, such as control and/or data;
transmission between any user, such as control and/or data; and
transmission of any transmission type, such as control and/or data.

For the fourth transmission object, in a case that the preset parameter includes a related identifier of a second preset device, the second preset device includes at least one of the following:
a device corresponding to at least one of a first device identifier, a first source device identifier (source ID), a first destination device identifier (destination ID), a first group identifier (group ID), and a first member identifier (member ID); and
a device that is in a group different from a group of the first device and/or the second device.

In this embodiment, a device corresponding to at least one of a source device identifier, a target device identifier, a group identifier, and a member identifier may be a device in the second-type power saving configuration, for example, a device in common DRX. Different groups may be understood as different network control interactive service (Network Control Interactive Service, NCIS) groups.

It is assumed that second-type power saving configurations of LTEs are the same. For example, common DRX configurations are the same. One UE intends to send a signal/channel/signaling/message/target object to one or more other LTEs corresponding to a destination ID. However, some or all of these UEs may be in a sleep or inactive state. In this case, in an implementation, the UE determines to send power saving information (optionally, the power saving information corresponds to a resource/content of the power saving information of the operation 1 and/or the operation 3), and activates/wakes the one or more UEs corresponding to the destination ID. Other LTEs that are not corresponding to the destination ID may still continue to sleep.

The fifth transmission object is a transmission object determined according to an association relationship between the preset information and the preset parameter and an association relationship between the preset parameter and the transmission object; or the fifth transmission object is a transmission object determined according to an association relationship between the preset information and the transmission object.

For example, in an embodiment, a specific association parameter is geographic location information, for example, resources of different power saving information are mapped according to zones (zone) in which different sending UE is located and/or zones in which different receiving UE is located and/or a distance between sending UE and receiving UE. For example, different geographic locations correspond to different resources. Power saving information corresponding to a geographic location 1 may control a target object of a user corresponding to the geographic location 1. In an implementation, the user in the geographic location 1 monitors power saving information on a resource corresponding to the geographic location 1, so that the power saving information corresponding to the geographic location 1 can control the target object of the user corresponding to the geographic location 1. Optionally, a user in another geographic location does not monitor the resource, or is not controlled by the power saving information. In this case, LTE that is too far away or is not in a same zone may not wake up to receive a packet that is too far away or a packet in a different zone, or LTE that has no geographic location information may not wake up to receive the packet.

Optionally, in an embodiment, the target object associated with the target operation meets at least one of the following:
in a case that the power saving information is first power saving information, that the target object is the first transmission object;
in a case that the power saving information is second power saving information, that the target object is the second transmission object or the third transmission object; and
in a case that the power saving information is third power saving information, that the target object is the third transmission object, where
the first power saving information corresponds to at least one first-type power saving configuration, the second power saving information corresponds to at least one second-type power saving configuration, the third power saving information corresponds to at least one power saving configuration in target power saving configurations, and the target power saving configurations include the first-type power saving configuration and the second-type power saving configuration.

In this embodiment, for the first transmission object, for example, power saving signaling instructs the first-type power saving configuration (for example, a dedicated DRX configuration) to sleep in a subsequent active time, a connection-based target object corresponding to the first-type power saving configuration is not transmitted within the active time, and whether a connectionless target object is transmitted is not limited.

For the second transmission object, for example, power saving signaling instructs the second-type power saving configuration (for example, a public DRX configuration) to sleep in a subsequent active time, a connection-based target object and a connectionless target object are not transmitted within the active time (transmission of broadcast, multicast, or unicast is controlled), or a connectionless target object is not transmitted (transmission of a connection other than a unicast connection is controlled).

It should be understood that specific control of the preset parameter may be set according to an actual requirement. For example, in an embodiment, the preset parameter may include at least one of the following: a maximum transmit power, a target transmit power, a power factor, a path loss, a path loss factor, a quantity of electricity, an interference degree, a power saving configuration identifier, a periodicity of a power saving configuration, active duration of the power saving configuration, inactive duration of the power saving configuration, a power saving configuration type, a power saving information type, the target operation, the target object, a related identifier of user equipment, an identifier of a first object, a transmission direction, area information, distance information, a priority, a related parameter of the first preset condition, a type of the user equipment, a capability of the user equipment, a moving speed of the user equipment, a state of the user equipment, geographic location information of the user equipment, a transmission type, and a transmission state.

The first preset condition is a condition for determining, based on the power saving information or a measurement result of the first resource, that the power saving information is received. The first object includes at least one of the following: a connection, a group, a service, a quality of service (Quality of Service, QOS), a flow (flow), a radio bearer (bear), a resource pool, a bandwidth part, and a carrier. That is, the preset parameter may be an identifier of a connection, a group, a service, a QOS, a flow, a bearer, a resource pool, a bandwidth part, or a carrier.

Optionally, in an embodiment, the determining a first resource includes:
determining, according to a preset parameter, the first resource that carries the power saving information.

In this embodiment, when the preset parameter includes the related identifier of the user equipment, the related identifier of the user equipment may be at least one of a source ID, a destination ID, a member ID, a group ID of a user, or the like, for example, an NCIS group ID. For example, there are T resources, and it is determined, according to a destination ID mode T, that one of the resources is to be sent, so that UE that does not correspond to the ID may not be affected/controlled.

The priority may be understood as a priority carried in a physical layer, a logical channel priority, or a logical channel group priority. This is not further limited herein.

The related parameter of the first preset condition may be understood as at least one of a first preset time period, N1, N2, N3, N4, a first threshold, a second threshold, a first range, and a second range.

The type of the user equipment includes pedestrian user equipment (pedestrian user equipment, PUE), vehicle user equipment (vehicle user equipment, PUE), a home appliance, scheduled user equipment, scheduling user equipment, and a wearable device. In an embodiment, the first resource may be determined according to whether the type of the user equipment is a preset type of the user equipment. In another embodiment, it may be specified that different user equipment types correspond to different resources, so that the first resource can be determined according to the type of the user equipment.

The capability of the user equipment may be understood as whether the user equipment has a high-capacity battery or an external power supply, or whether a rest power capacity is low. In an embodiment, it may be specified that having a high-capacity battery and having no high-capacity battery correspond to different resources. In another embodiment, it may be specified that having an external power supply and having no external power supply correspond to different resources. In this way, in this embodiment, the first resource may be determined based on a user capability.

For the speed of the user equipment, it may be specified that a device whose moving speed is less than the preset value and a device whose moving speed is greater than or equal to the preset value correspond to different first resources. For example, the first resource may be determined according to whether the user equipment is a low-speed moving or still device, for example, the low-speed or still device corresponds to enabling, activation, or sleep.

The state of the user equipment may be understood as including at least one of the following states: high interference, low interference, a high power, a low power, startup, restart, breakdown, upgrade, link establishment, synchronization, group establishment, a normal operation, and a fault.

The geographic location information may be understood as at least one of the following: an absolute location, a relative location, a direction, latitude and longitude information, zone information, zones in which different sending user equipment is located, zones in which different receiving user equipment is located, or a distance between sending user equipment and receiving user equipment.

The transmission type may include broadcast, multicast, and unicast.

The transmission state may be understood as a state according to whether a new data indication (New data indication, NDI) is reversed, or may be understood as an initial transmission state initial transmission and a retransmission state. For example, resources corresponding to initial transmission and retransmission are different.

The path loss may be understood as an SL path loss and/or a Uu path loss. The path loss may also be referred to as a path loss value.

The quantity of electricity may be understood as a specific electricity value, and the interference degree may be understood as a specific interference strength percentage.

Optionally, in an embodiment, each preset parameter is associated with at least one of the following: a time domain resource for transmitting the power saving information, a frequency domain resource for transmitting the power saving information, a code domain resource for transmitting the power saving information, and content included in the target information.

In this embodiment, different values of the preset parameter and/or ranges of different values of the preset parameter and/or quantization values of different values of the preset parameter may be used to transmit target information of the power saving information. The target information may be at least one of a time domain resource, a frequency domain resource, a code domain resource, and content. Therefore, one or more resources and/or content for transmitting the power saving information may be set according to the different values of the preset parameter and/or the ranges of the different values of the preset parameter and/or the quantization values of the different values of the preset parameter.

For example, in an embodiment, resources of power saving information corresponding to the first-type power saving configuration and the second-type power saving configuration are different. Specifically, resources of power saving information corresponding to dedicated DRX and public DRX are different.

For example, in an embodiment, code domain resources of power saving information corresponding to different LTE IDs are different. Specifically, sequences may be different or scrambling methods may be different. For example, a scrambling method is performed by using a UEID related to the power saving information, so that other unrelated user equipment cannot decode the power saving information and therefore is not affected by the power saving information, and related UE can normally decode the power saving information and therefore is affected/controlled by the power saving information.

For example, in an embodiment, resources and/or content of power saving information corresponding to different longitude and latitude are different; resources and/or content of power saving information corresponding to different zone IDs are different; resources and/or content of power saving information corresponding to different zones in which different sending user equipment is located are different; resources and/or content of power saving information corresponding to different zones in which different receiving user equipment is located are different; resources and/or content of power saving information corresponding to different distances between sending user equipment and receiving user equipment are different. Specifically, for example, if a distance between sending user equipment that sends power saving information and receiving user equipment is too far, or zones are different, the sending UE may ignore the power saving information, that is, the sending UE is waked up/activated to receive a packet that is too far, or packets in different zones.

Optionally, in an embodiment, the power saving information is further used to indicate at least one of the following:
at least one resource set associated with the target object; and
at least one resource set that needs to be switched to, where
the resource set includes a preset resource pool, a preset bandwidth part, or a preset carrier.

In this embodiment, the at least one resource set associated with the target object may be understood as a controlled or affected resource set. Optionally, in an embodiment, the first device may be further switched to the at least one resource set associated with the target object to perform the target operation.

The at least one resource set that needs to be switched to may be understood as a resource set that is not controlled or affected. When only the at least one resource set that needs to be switched is indicated, resource sets other than the at least one resource set that needs to be switched are controlled or affected.

Optionally, in an embodiment, it is determined, when at least one of the following is met, that the power saving information is received:
that the power saving information is sensed; for example, a power saving signal or a power saving sequence is sensed;
that the power saving information is received; for example, a power saving signal or channel or signaling is received;
that a measurement result of the power saving information meets a first preset condition; and
that a measurement result of the first resource meets the first preset condition.

That the power saving information is sensed may be understood as that a power saving signal or sequence is sensed; and that the power saving information is received may be understood as that a power saving channel or signaling is received.

The measurement result may include at least one of the following: a reference signal received power (Reference Signal Received Power, RSRP), a received signal strength (Received Signal Strength, RSS), a reference signal received quality (Reference Signal Received Quality, RSRQ)/SINR, energy of one or more resource elements (resource element, RE), an average value of the energy of the one or more REs, energy of one or more symbols, and an average value of the energy of the one or more symbols.

The RSRP may be a linear average on a part or all of REs that carry signals.

The RSSI may be a linear average on a part or all of OFDM symbols that carry signals.

Configurations of the first threshold, the second threshold, the first preset range, and the second range in the first preset condition meet at least one of the following: being configured for each BWP/carrier/resource pool, being configured for each user equipment, being configured according to a logical channel, being configured according to a logical channel group, being configured according to a QoS, being configured according to a retransmission rate/an idle rate/a success rate/a failure rate/a CR/a CBR, and being configured according to a priority (for example, a logical channel priority).

Optionally, in an embodiment, the method further includes: determining a behavior of the first device according to a third preset condition or a preset parameter, where
the behavior of the first device includes at least one of the following:
not sensing the power saving information;
ignoring the power saving information; and
determining that content indicated by the power saving information is invalid; and
determining that the power saving information indicates preset content.

In this embodiment, the third preset condition includes at least one of the following: that the target device has distance information; that a distance between the first device and the second device is within a preset distance range; that the first device and the second device are in a same geographic range; that the target device has a power saving configuration; that the target device supports a power saving configuration; that the target device is a device of a preset type; that the target device has a preset capability; that a moving speed of the target device is less than a preset value; that the target device is in a preset state; that the target device corresponds to the preset parameter; that the target device has a power saving information configuration; and that the target device supports the power saving information.

Optionally, the target device in the third condition may be only the first device. That is, the third preset condition includes at least one of the following: that the first device has geographic location information; that the first device is in a preset location; that the first device has distance information; that a distance between the first device and the second device is within a preset distance range; that the first device and the second device are in a same or adjacent geographic range; that the first device has a power saving configuration; that the first device supports a power saving configuration; that the first device is a device of a preset type; that the first device has a preset capability; that a moving speed of the first device is less than a preset value; that the first device is in a preset state; that the first device is associated with the preset parameter; that the first device has a power saving information configuration; and that the first device supports the power saving information.

In this embodiment, when the third preset condition is met, the third preset condition may correspond to one or more behaviors, and when the third preset condition is not met, the third preset condition may correspond to other one or more behaviors. Behaviors corresponding to different third conditions may be the same or different.

Optionally, in an embodiment, when the target device does not have the distance information, the distance between the first device and the second device exceeds the preset distance range, or the target device is not in the same geographic range, the first device includes at least one of the following behaviors: not sensing the power saving information, ignoring the power saving information, determining that content indicated by the power saving information is invalid, or determining, by a user, that the power saving information indicates specific content. Not sensing the power saving information may be understood as not sensing a possible resource of the power saving information.

Optionally, in an embodiment, when the target device does not have or does not support the power saving configuration, the first device includes at least one of the following behaviors: not sensing the power saving information, ignoring the power saving information, determining that content indicated by the power saving information is invalid, or determining, by a user, that the power saving information indicates specific content.

Optionally, in an embodiment, when the target device is of a specified user type or has a capability (VLTE or a scheduling user or has an external power supply), the first device includes at least one of the following behaviors: not sensing the power saving information, ignoring the power saving information, determining that content indicated by the power saving information is invalid, or determining, by a user, that the power saving information indicates specific content.

Optionally, in an embodiment, when the target device is in the preset state (for example, startup/restart/breakdown/upgrade/link establishment/synchronization/group establishment), the first device includes at least one of the following behaviors: not sensing the power saving information, ignoring the power saving information, determining that content indicated by the power saving information is invalid, or determining, by a user, that the power saving information indicates specific content.

Optionally, in an embodiment, when the target device is a mobile device, the first device includes at least one of the following behaviors: not sensing the power saving information, ignoring the power saving information, determining that content indicated by the power saving information is invalid, or determining, by a user, that the power saving information indicates specific content.

Optionally, in an embodiment, when the target device does not correspond to the association parameter of the power saving information, the first device includes at least one of the following behaviors: not sensing the power saving information, ignoring the power saving information, determining that content indicated by the power saving information is invalid, or determining, by a user, that the power saving information indicates specific content. In this way, unrelated user equipment cannot decode the power saving information and therefore is not affected by the power saving information, and related UE can decode the power saving information normally and therefore is affected/controlled.

Optionally, in an embodiment, when the target device does not have the geographic location information or a geographic location does not meet a preset geographic location requirement, the first device includes at least one of the following behaviors: not sensing the power saving information, ignoring the power saving information, determining that content indicated by the power saving information is invalid, or determining, by a user, that the power saving information indicates specific content. For example, if a distance between sending user equipment that sends power saving information and receiving user equipment is too far, or zones are different, the receiving UE may ignore the power saving information, that is, the receiving UE is waked up/activated to receive a packet that is too far, or packets in different zones.

For example, user equipment that does not have geographic location information may not sense the power saving information, ignore the power saving information, or determine that content indicated by the power saving information is invalid, or the user equipment considers that the power saving information indicates specific content.

Optionally, in an embodiment, when a transmission state of a transport block (Transport Block, TB), a packet, and a Medium Access Control protocol data unit (Medium Access Control Protocol Data Unit, MAC PDU) is retransmission or an NDI is not reversed, the first device includes at least one of the following behaviors: not sensing the power saving information, ignoring the power saving information, determining that content indicated by the power saving information is invalid, or determining, by a user, that the power saving information indicates specific content.

For example, when a transmission state of a TB, a packet, or a MAC PDU is retransmission or an NDI is not reversed, if the user equipment successfully receives and/or decodes the TB, the packet, or the MAC PDU, the user equipment may not sense the power saving information, ignore the power saving information, determine that content indicated by the power saving information is invalid, or consider that the power saving information indicates specific content.

Optionally, in an embodiment, the power saving information may use a specific code point, a specific signal, a specific channel, or specific signaling. Optionally, in an embodiment, it is determined that the preset content indicated by the power saving information is a sleep state.

Optionally, in an embodiment, it is determined, when at least one of the following is met, that the power saving information needs to be received:
determining that a sixth transmission object needs to be sent, where the sixth transmission object includes data, a data packet, a transport block, or a Medium Access Control protocol data unit;
determining that the sixth transmission object needs to be sent and at least one device related to the sixth transmission object is in a sleep state;
determining that the sixth transmission object needs to be sent to the second device and the first device and/or the second device are/is in a sleep state;
determining that the at least one device related to the sixth transmission object received the power saving information;
determining that no sixth transmission object needs to be sent;
determining that no sixth transmission object needs to be sent and the at least one device related to the sixth transmission object is in an active state;
determining that no sixth transmission object needs to be sent to the second device and the first device and/or the second device are/is in an active state;
determining that a measurement result of the power saving information meets a fourth preset condition;
determining that the first resource meets the fourth preset condition;
determining that the sixth transmission object needs to be received, where the sixth transmission object includes data, a data packet, a transport block, or a Medium Access Control protocol data unit;
determining that the sixth transmission object needs to be received and the at least one device related to the sixth transmission object is in a sleep state;
determining that there is the sixth transmission object sent by the second device and the first device and/or the second device are/is in a sleep state;
determining that the at least one device related to the sixth transmission object sends the power saving information;
determining that no sixth transmission object needs to be received;
determining that no sixth transmission object needs to be received and the at least one device related to the sixth transmission object is in an active state;
determining that there is no sixth transmission object sent by the second device and the target device is in an active state; and
that the first resource meets a first preset condition.

In this embodiment, that it is determined that the at least one device related to the sixth transmission object sends the power saving information may include the following cases:
1. Determine that the user and/or a related user receives the power saving information indicating the operation 1/the operation 3. In this case, the power saving information is sent to wake up the user equipment (operation 2).

In this embodiment, that it is determined that the at least one device related to the sixth transmission object received the power saving information may include the following cases:
1. Determine that the user and/or a related user receive the power saving information indicating the operation 2/the operation 4. In this case, the power saving information is sent to wake up the user equipment (operation 2).

The active state may be understood as a wake-up state or an active state.

Optionally, the fourth preset condition includes any one of the following: that M1 measurement results are greater than a third threshold, that M2 measurement results are less than a fourth threshold, that all M3 measurement results are in a third range, and that all M4 measurement results are outside a fourth range, where M1, M2, M3, and M4 are positive integers.

The M1 measurement results, the M2 measurement results, the M3 measurement results, and the M4 measurement results may be understood as continuous or discontinuous measurement results, or may be measurement results in a period of time. This is not further limited herein.

It should be understood that different operations may have different corresponding values of M1, M2, M3, M4, the third threshold, the fourth threshold, the third preset range, and the fourth preset range.

It should be noted that the first resource of the power saving information may include at least one of a time domain resource, a frequency domain resource, and a code domain resource.

Optionally, the code domain resource of the power saving information includes at least one of the following:
a scrambling method: the power saving information is scrambled by using a specific format, or a specific identifier, or a specific sequence, where the specific format may be understood as a control signal, a channel, or a signaling format; and
one or more specific sequences, specific sequence groups, specific formats, adequate format groups, specific cyclic shifts, or specific cyclic shift groups that may be used to carry the power saving information.

Optionally, a frequency domain resource location of the power saving information includes at least one of the following:

N1 subchannels (subchannel)/physical resource blocks (Physical Resource Block, PRB)/PRB groups/interlaces(interlace)/combs (comb) in a target location in a resource pool, a BWP, a carrier, and a carrier group; or N2 subchannels/PRBs/PRB groups/interlaces/combs with a target number in a resource pool, a BWP, a carrier, and a carrier group, where the target location is a highest location, a lowest location, or a preset location, and the target number is a highest number, a lowest number, or a preset number.

The frequency domain resource of the power saving information and another channel are frequency division multiplex (frequency division multiplex, FDM). Optionally, the power saving information may be SL power saving information, and another channel may be a channel such as a physical sidelink control channel (Physical Sidelink Control Channel, PSCCH), a physical sidelink shared channel (Physical Sidelink Shared Channel, PSSCH), and a physical sidelink feedback channel (Physical Sidelink Feedback Channel, PSFCH). For example, a resource corresponding to a bit 0 in PSFCH indication information indicating a PSFCH frequency domain resource may be used for the power saving information.

Optionally, a time domain resource location of the power saving information includes at least one of the following:
that the power saving information occupies L 1 time elements; and
that L1 symbols occupied by the power saving information and a symbol of a second object at least partially overlap.

The L1 time elements may be any one of the following:
the first L 1 time elements of one or some target times or every P target times, where the target time is a slot, a slot group, a mini-slot, a mini-slot group, a symbol, a symbol group, a subframe, a subframe group, a frame, a frame group, or a preset periodicity;
the last L 1 time elements of one or some target times or every P target times; and
continuous L1 time elements after mapping starts from an L2-th time element of one or some target times or every P target times.

Optionally, P is a positive integer. For example, if power saving information appears in every P slots, it may be understood that a periodicity of the power saving information is P slots.

Optionally, a unit of the foregoing time element may be a slot, a slot group, a mini-slot, a mini-slot group, a symbol, a symbol group, a subframe, a subframe group, a frame, a frame group, or a preset periodicity.

Optionally, if the second object meets: the power saving information is SL power saving information, the second object may be an interval between a third object and a feedback channel. The third object is any one of the following: a feedback channel, automatic gain control (Automatic Gain Control, AGC), a GP, the first SL symbol in an SL slot, the first SL symbol in an SL mini slot, the last SL symbol in an SL slot, the last SL symbol in an SL mini slot, and a data channel. For example, the power saving information occupies two symbols, and the two symbols are two symbols in which an SL feedback channel PSFCH is located.

Optionally, the time domain resource configuration of the power saving information includes at least one of a periodicity, an offset, a time window, a quantity, and a resource interval.

The time domain resource of the power saving information may be periodic, may be a resource determined by an offset relative to a specific location, and there may be a plurality of possible time domain resources in a period of time. For example, in a time window with an offset before a DRX active time, K possible time domain locations are used to transmit the power saving information.

Optionally, the power saving information includes at least one of a power saving signal, a power saving channel, and power saving signaling.

The power saving signal is at least one of a reference signal and a specific sequence.

Optionally, the specific sequence may be at least one of a GOLD sequence, a ZC sequence, an m sequence, and a low peak to average power ratio (low Peak to Average Power Ratio, low PAPR) sequence.

Optionally, the power saving signal is an SL reference signal/a specific sequence, and the SL signal includes at least one of an SL channel state information reference signal (Channel State Information Reference Signal, CSI-RS), an SL sounding reference signal (Sounding Reference Signal, SRS), an SL positioning reference signal (Positioning Reference Signal, PRS), an SL phase tracking reference signal (Phase-tracking reference signal, PT-RS), an SL demodulation reference signal (Demodulation Reference Signal, DMRS), and an SL sequence.

The power saving channel is at least one of a control channel/a data channel/a feedback channel.

Optionally, the power saving channel is an SL channel, and the SL channel includes at least one of a PSCCH, a PSSCH, and a PSFCH.

The power saving signaling is at least one of radio resource control (Radio Resource Control, RRC) signaling, packet data convergence protocol (Packet Data Convergence Protocol, PDCP) signaling, radio link control (Radio Link Control, RLC) signaling, MAC signaling, service data adaptation protocol (Service Data Adaptation Protocol, SDAP) signaling, and physical layer signaling.

Optionally, the RRC signaling may be at least one of connection establishment completion signaling, a radio link failure (Radio Link Failure, RLF), and a BF. For example, when the RRC signaling is the connection establishment completion signaling, dedicated DRX is enabled, activated, or normally transmitted; for example, when the RLF is triggered, the dedicated DRX is disabled, deactivated, or sleep.

Optionally, the physical layer signaling may be at least one of sidelink control information (Sidelink Control Information, SCI) or downlink control information (Downlink Control Information, DCI). For example, the SCI may be first-level SCI (for example, SCI format 1-X) or second-level SCI (for example, SCI format 2-X).

To better understand the embodiments of this application, specific implementations of the embodiments of this application are described in detail below by using specific examples.

### Embodiment 1: operation

Power saving information 1 indicates an operation 1: keep inactive/sleep in the first preset time period, that is, the power saving information 1 is used to instruct the user to keep inactive/sleep in the first preset time period.

Optionally, controlled/affected user equipment does not perform corresponding transmission on the target object within the first preset time period. For example, the user equipment 1 does not perform receiving, and/or the user equipment 2 does not perform sending.

Optionally, controlled/affected user equipment is switched to a first resource pool, a first BWP, or a first carrier.

Optionally, the user equipment does not perform corresponding transmission on the target object on the first resource pool, the first BWP, or the first carrier within the first preset time period. For example, the user equipment 1 does not perform receiving, and/or the user equipment 2 does not perform sending.

Power saving information 2 indicates an operation 2: being waked up/keep an active state/not sleep (that is, normal transmission) in the second preset time period, that is, the power saving information is used to instruct the user to be waked up/keep an active state/not to sleep in the second preset time period.

Optionally, controlled/affected user equipment may perform corresponding transmission on the target object within the second preset time period. For example, the user equipment 1 does not perform receiving, and/or the user equipment 2 does not perform sending.

Optionally, controlled/affected user equipment is switched to a second resource pool, a second BWP, or a second carrier.

Optionally, the user equipment does not perform corresponding transmission on the target object on the second resource pool, the second BWP, or the second carrier within the second preset time period. For example, the user equipment 1 does not perform receiving, and/or the user equipment 2 does not perform sending.

### Embodiment 2: power saving information type.

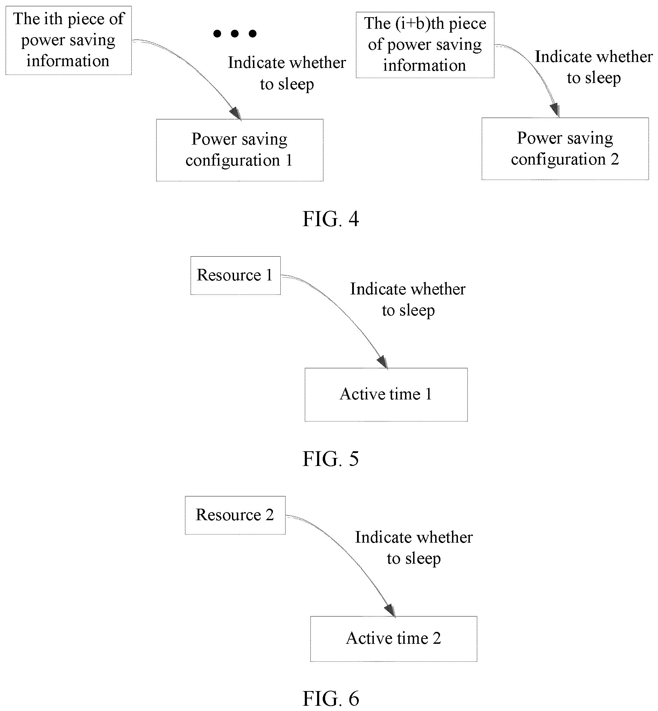

The power saving information type includes at least one of the following:
Power saving information type 1: used to control an operation of a user in (one or more or all) first-type power saving configurations corresponding to the power saving information. As shown in FIG. 3, in an embodiment, one piece of power saving information may control or affect a plurality of power saving configurations at the same time. As shown in FIG. 4, in another embodiment, each piece of power saving information controls or affects one power saving configuration. In this case, when a plurality of power saving configurations need to be controlled or affected, a plurality of pieces of power saving information may be sent.
Power saving information type 2: used to control an operation of a user in (one or more or all) second-type power saving configurations corresponding to the power saving information. As shown in FIG. 3, in an embodiment, one piece of power saving information may control or affect a plurality of power saving configurations at the same time. As shown in FIG. 4, in another embodiment, each piece of power saving information controls or affects one power saving configuration. In this case, when a plurality of power saving configurations need to be controlled or affected, a plurality of pieces of power saving information may be sent. In FIG. 4, two different power saving configurations may be separately controlled or affected by using an i-th piece of configuration information and an (i+b)-th piece of configuration information, where both i and b are positive integers.
Power saving information type 3: used to control an operation of a user in (one or more or all) power saving configurations corresponding to the power saving information, that is, a power saving information type does not correspond to a power saving configuration type. As shown in FIG. 3, in an embodiment, one piece of power saving information may control or affect a plurality of power saving configurations at the same time. As shown in FIG. 4, in another embodiment, each piece of power saving information controls or affects one power saving configuration. In this case, when a plurality of power saving configurations need to be controlled or affected, a plurality of pieces of power saving information may be sent.

Optionally, the power saving information corresponds to at least one of the first-type power saving configuration and the second-type power saving configuration.

Optionally, at least power saving information corresponding to the first-type power saving configuration is a power saving information type 1/type 3.

For example, power saving information corresponding to the dedicated DRX is the type 1, that is, the power saving information can be used to control only an operation of a user in the dedicated DRX. It is mainly considered that dedicated DRX may be specially established for a unicast connection, and therefore other DRX cannot be affected.

Optionally, at least power saving information corresponding to the second-type power saving configuration is the power saving information type 2/type 3.

For example, power saving information corresponding to the common DRX is the type 3, that is, the power saving information can be used to control operations of the user in the common DRX and the dedicated DRX.

Embodiment 3: correspondence between different power saving information and a time that can be controlled.

Optionally, different power saving information and/or (possible transmission resources of) different power saving information corresponds to different first preset times/second preset times.

Optionally, for example, a plurality of power saving signals/sequences respectively correspond to different active times. For example, a signal/sequence 1 indicates sleep and corresponds to an active time 1, and a signal/sequence 2 indicates sleep and corresponds to an active time 2. If the signal/sequence 1 is sensed, sleep is entered within the active time 1. If the signal/sequence 2 is sensed, sleep is entered within the active time 2.

Optionally, for example, the sequence 1 corresponds to a sensing window configured periodically, and the sequence 2 corresponds to a sensing window configured aperiodically.

Optionally, for example, a plurality of power saving resources respectively correspond to different active times.

For example, a resource 1 corresponds to an active time 1 (as shown in FIG. 5), and a resource 2 corresponds to an active time 2 (as shown in FIG. 6). If it is determined that the power saving information indicating sleep is received on the resource 1, sleep is entered within the activate time 1.

Embodiment 4: power saving information resource location.

A time domain resource of power saving information may be periodic, may be a resource determined by an offset relative to a specific location, and there may be a plurality of possible time domain resources in a period of time.

For example, in a time window with an offset from a reference point, K1 possible time domain locations are used to transmit the power saving information, and an interval is Al.

For example, in a time window with an offset 1 before a DRX active time, K2 possible time domain locations are used to transmit the power saving information, and an interval is A2.

For example, in a time window with an offset 2 after a DRX active time, K3 possible time domain locations are used to transmit the power saving information, and an interval is A3.

Embodiment 5: power saving information indicates a resource set to which switching is to be performed.

Power saving information on a resource set A indicates that an indication field of the resource set to which switching is to be performed does not include a part corresponding to the resource set A.

Alternatively, power saving information on a resource set A indicates that an indication field of the resource set to which switching is to be performed includes a part corresponding to the resource set A, and the part corresponding to the resource set A is a first value. The first value represents sleep on the resource set A, and/or not switching to the resource set A. For example, the first value is 0.

If the user equipment sleeps or is deactivated on the resource set A, the user receives and/or transmits a synchronization signal on a resource set B. Optionally, the user receives and/or transmits, on the resource set B, a synchronization signal corresponding to the resource set A. Optionally, the user transmits, on the resource set B, a synchronization signal based on a synchronization resource corresponding to the resource set A.

If the user equipment sleeps or is deactivated on the resource set A, the user equipment sends a CSI request on the resource set B, and/or sends or receives a CSI report.

Optionally, the resource set B is a resource set that has a resource used to transmit a synchronization signal, or a resource set used for synchronization or in which a synchronization resource is located, or a resource set used to establish an RRC connection, or a resource set used to transmit a CSI request.

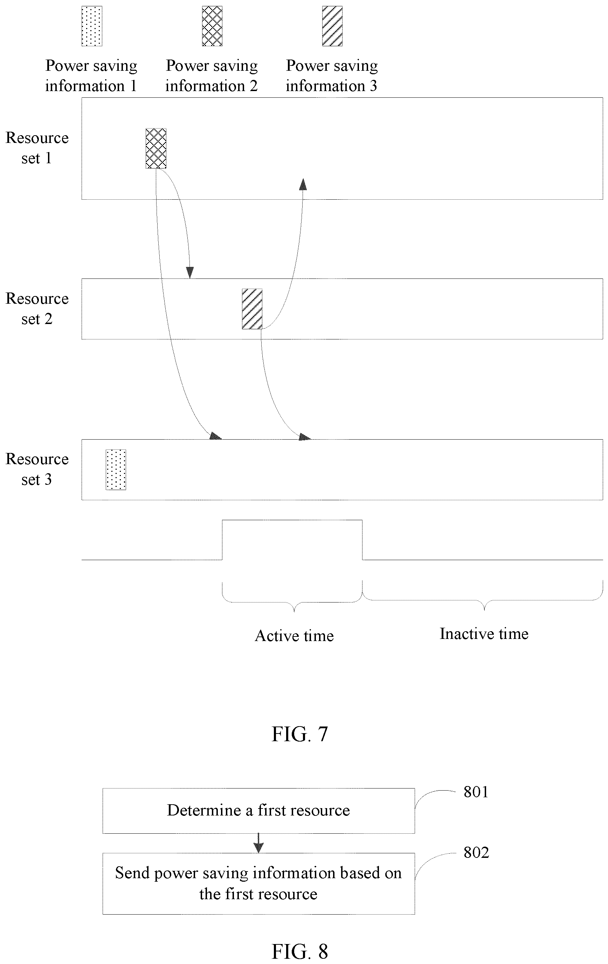

As shown in FIG. 7, the power saving information 2 on the resource set 1 indicates sleep and/or being switched to a resource set 2/a resource set 3; power saving information 3 on the resource set 2 indicates sleep and/or being switched to the resource set 1/the resource set 3; and the power saving information 1 on the resource set 1 indicates whether the user equipment sleeps within an active time in a power saving configuration.

Referring to FIG. 8, FIG. 8 is a flowchart of another transmission control method according to an embodiment of this application. The method is performed by a third device. As shown in FIG. 8, the method includes the following steps.

Step 801: determine a first resource.

Step 802: send power saving information based on the first resource.
the power saving information is used to instruct a target device to perform a target operation on a target resource, the target device includes at least one of a first device and a second device, the target operation includes wakeup, sleep, activation or deactivation, the target resource includes a sidelink resource, the first device is a device that receives the power saving information, and the second device is a device other than the first device.

Optionally, the power saving information includes indication information, and the indication information is used to indicate the target operation.

Optionally, before the sending power saving information based on the first resource, the method further includes at least one of the following:
determining the target operation according to a candidate resource of the power saving information;
determining the target operation according to whether a measurement result of the candidate resource of the power saving information meets the first preset condition;
determining the target operation according to the first resource;
determining the target operation according to whether the target device meets a second preset condition; and
determining the target operation according to a value of a preset parameter.

Optionally, the second preset condition includes at least one of the following: that the target device has geographic location information; that the target device has distance information; that a distance between the first device and the second device is within a preset distance range; that the target device is in a preset location; that the target device has a power saving configuration; that the target device supports a power saving configuration; that the target device is a device of a preset type; that the target device has a preset capability; that a moving speed of the target device is less than a preset value; that the target device is in a preset state; that the target device is associated with the preset parameter; that the target device has a power saving information configuration; and that the target device supports the power saving information.

Optionally, the power saving information is specifically used to instruct the target device to perform the target operation on the target resource in a power saving configuration.

Optionally, the power saving information corresponds to at least one power saving configuration.

Optionally, the power saving information includes first power saving information, second power saving information, or third power saving information, where the first power saving information corresponds to at least one first-type power saving configuration, the second power saving information corresponds to at least one second-type power saving configuration, the third power saving information corresponds to at least one power saving configuration in target power saving configurations, and the target power saving configurations include the first-type power saving configuration and the second-type power saving configuration.

Optionally, power saving information corresponding to power saving configurations of different types meets at least one of the following:
that types of the power saving information are different;
that resources of the power saving information are different;
that manners of determining the resources of the power saving information are different; and
that sequences, channels, signals, or signaling of the resources of the power saving information is different.

Optionally, after the sending power saving information based on the first resource, the method further includes at least one of the following:
before a next piece of power saving information is received or sent, performing the target operation indicated by the currently received power saving information; and
performing, within a first preset time period, the target operation indicated by the currently received power saving information.

Optionally, the performing the target operation includes any one of the following:
performing the target operation within a first preset time period;
performing the target operation within an inactive time in a power saving configuration corresponding to the power saving information and/or an active time in the power saving configuration corresponding to the power saving information; and
performing the target operation within the inactive time in the power saving configuration corresponding to the power saving information.

Optionally, the first preset time period includes at least one of the following defined time:
at least one time unit;
at least one active time in the power saving configuration; and
at least one inactive time in the power saving configuration.

Optionally, the time unit includes at least one of the following: a slot, a slot group, a mini-slot, a mini-slot group, a symbol, a symbol group, a subframe, a subframe group, a frame, a frame group, preset duration, a channel occupancy time, and a measurement window length.

Optionally, the preset duration is duration corresponding to at least one of the following: a periodicity of the candidate resource of the power saving information, a periodicity of the first resource, a periodicity of a discovery resource, a periodicity of a synchronization resource, a periodicity of a control resource, a periodicity of a data resource, a periodicity of a feedback resource, a periodicity of a measurement resource, a service periodicity, a periodicity of a data packet, a power saving configuration periodicity, a periodicity of a resource pool, a periodicity of a search space, a sensing step, a sensing periodicity, a sensing window length, a selection window length, a periodicity of a reference signal, and a reservation periodicity.

Optionally, the power saving information is further used to indicate a transmission direction of at least one of the first device and the second device.

Optionally, a target object associated with the target operation includes any one of the following:
a first transmission object, where the first transmission object is a transmission object associated with at least one of a preset transmission, a preset connection, a first preset device, and a preset power saving configuration;
a second transmission object, where the second transmission object is a transmission object other than the first transmission object;
a third transmission object, where the third transmission object is any transmission object;
a fourth transmission object, where the fourth transmission object is associated with a preset parameter; and
a fifth transmission object, where the fifth transmission object is associated with preset information, where
the preset information includes at least one of content included in the power saving information, the first resource, and a resource that can be used for the power saving information.

Optionally, the preset parameter includes a related identifier of a second preset device, and the second preset device includes at least one of the following:
a device corresponding to at least one of a first device identifier, a first source device identifier, a first destination device identifier, a first group identifier, and a first member identifier; and
a device that is in a group different from a group of the first device and/or the second device.

Optionally, the fifth transmission object is a transmission object determined according to an association relationship between the preset information and the preset parameter and an association relationship between the preset parameter and the transmission object; or
the fifth transmission object is a transmission object determined according to an association relationship between the preset information and the transmission object.

Optionally, the target object associated with the target operation meets at least one of the following:
in a case that the power saving information is first power saving information, that the target object is the first transmission object;
in a case that the power saving information is second power saving information, that the target object is the second transmission object or the third transmission object; and
in a case that the power saving information is third power saving information, that the target object is the third transmission object, where
the first power saving information corresponds to at least one first-type power saving configuration, the second power saving information corresponds to at least one second-type power saving configuration, the third power saving information corresponds to at least one power saving configuration in target power saving configurations, and the target power saving configurations include the first-type power saving configuration and the second-type power saving configuration.

Optionally, the determining a first resource includes:
determining, according to a preset parameter, the first resource that carries the power saving information.

Optionally, the power saving information is further used to indicate at least one of the following:
at least one resource set associated with the target object; and
at least one resource set that needs to be switched to, where
the resource set includes a preset resource pool, a preset bandwidth part, or a preset carrier.

Optionally, the method further includes:
determining a behavior of the third device according to a third preset condition or a preset parameter, where
the behavior of the third device includes at least one of the following:
   not sending the power saving information;
   determining that content indicated by the power saving information is invalid; and
   determining that the power saving information indicates preset content.

Optionally, the third preset condition includes at least one of the following: that the target device has geographic location information; that the target device is in a preset location; that the target device has distance information; that a distance between the first device and the second device is within a preset distance range; that the first device and the second device are in a same or adjacent geographic range; that the target device has a power saving configuration; that the target device supports a power saving configuration; that the target device is a device of a preset type; that the target device has a preset capability; that a moving speed of the target device is less than a preset value; that the target device is in a preset state; that the target device is associated with the preset parameter; that the target device has a power saving information configuration; and that the target device supports the power saving information.

Optionally, the preset parameter includes at least one of the following: a maximum transmit power, a target transmit power, a power factor, a path loss, a path loss factor, a quantity of electricity, an interference degree, a power saving configuration identifier, a periodicity of a power saving configuration, active duration of the power saving configuration, inactive duration of the power saving configuration, a power saving configuration type, a power saving information type, the target operation, the target object, a related identifier of user equipment, an identifier of a first object, a transmission direction, zone information, distance information, a priority, a related parameter of the first preset condition, a type of the user equipment, a capability of the user equipment, a moving speed of the user equipment, a state of the user equipment, geographic location information of the user equipment, a transmission type, and a transmission state.

Optionally, the first preset condition is a condition for determining, based on the power saving information or a measurement result of the first resource, that the power saving information is received.

Optionally, the first object includes at least one of the following: a connection, a group, a service, a quality of service, a flow, a radio bearer, a resource pool, a bandwidth part, and a carrier.

Optionally, the first preset condition includes any one of the following: that N1 measurement results are greater than a first threshold, that N2 measurement results are less than a second threshold, that all N3 measurement results are in a first range, and that all N4 measurement results are outside a second range, where N1, N2, N3, and N4 are positive integers.

Optionally, each preset parameter is associated with at least one of the following: a time domain resource for transmitting the power saving information, a frequency domain resource for transmitting the power saving information, a code domain resource for transmitting the power saving information, and content included in the target information.

Optionally, it is determined, when at least one of the following is met, that the power saving information needs to be sent:
determining that a sixth transmission object needs to be sent, where the sixth transmission object includes data, a data packet, a transport block, or a Medium Access Control protocol data unit;
determining that the sixth transmission object needs to be sent and at least one device related to the sixth transmission object is in a sleep state;
determining that the sixth transmission object needs to be sent to the second device and the first device and/or the second device are/is in a sleep state;
determining that the at least one device related to the sixth transmission object received the power saving information;
determining that no sixth transmission object needs to be sent;
determining that no sixth transmission object needs to be sent and at least one device related to the sixth transmission object is in an active state;
determining that no sixth transmission object needs to be sent to the second device and the first device and/or the second device are/is in an active state;
determining that a measurement result of the power saving information meets a fourth preset condition; and
determining that the first resource meets the fourth preset condition.

Optionally, the third preset condition includes at least one of the following: that M1 measurement results are greater than a third threshold, that M2 measurement results are less than a fourth threshold, that all M3 measurement results are in a third range, and that all M4 measurement results are outside a fourth range, where M1, M2, M3, and M4 are positive integers.

Optionally, the power saving information includes at least one of a power saving sequence, a power saving channel, and power saving signaling.

It should be noted that this embodiment is used as an implementation of the third device corresponding to the embodiment shown in FIG. 2. For a specific implementation of this embodiment, refer to the related descriptions of the embodiment shown in FIG. 2. A same beneficial effect can also be achieved. To avoid repeated descriptions, details are not described again herein.

It should be noted that the transmission control method provided in the embodiments of this application may be performed by a transmission control apparatus, or a control module that is in the transmission control apparatus and that is configured to perform the transmission control method. In the embodiments of this application, that the transmission control apparatus performs the transmission control method is used as an example to describe the transmission control apparatus provided in the embodiments of this application.

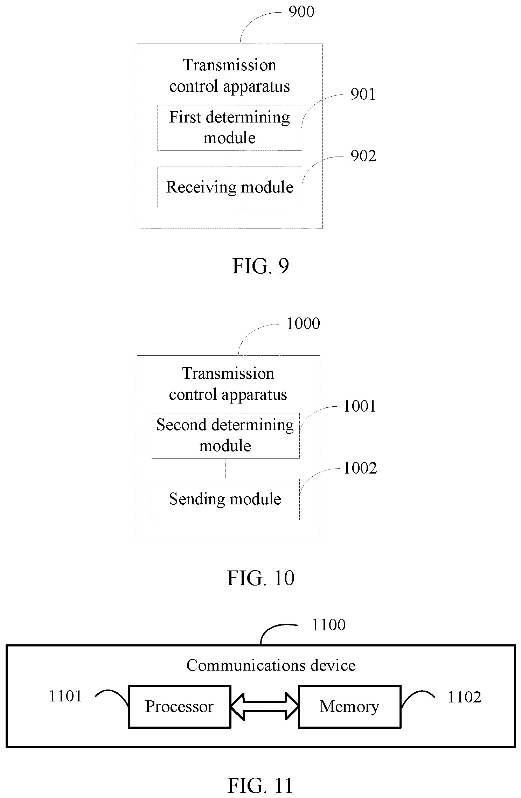

Referring to FIG. 9, FIG. 9 is a structural diagram of a transmission control apparatus according to an embodiment of this application. As shown in FIG. 9, a transmission control apparatus 900 includes:
a first determining module 901, configured to determine a first resource; and
a receiving module 902, configured to receive power saving information based on the first resource, where
the power saving information is used to instruct a target device to perform a target operation on a target resource, the target device includes at least one of the first device and a second device, the target operation includes wakeup, sleep, activation or deactivation, and the target resource includes a sidelink resource.

Optionally, the power saving information includes indication information, and the indication information is used to indicate the target operation.

Optionally, the first determining module 901 is further configured to perform at least one of the following:
determining the target operation according to a candidate resource of the power saving information;
determining the target operation according to whether the power saving information is sensed;
determining the target operation according to whether the power saving information is received;
determining the target operation according to whether a measurement result of the power saving information meets a first preset condition;
determining the target operation according to whether a measurement result of the candidate resource of the power saving information meets the first preset condition;
determining the target operation according to the first resource;
determining the target operation according to whether the target device meets a second preset condition; and
determining the target operation according to a preset parameter.

Optionally, the second preset condition includes at least one of the following: that the target device has geographic location information; that the target device has distance information; that a distance between the first device and the second device is within a preset distance range; that the target device is in a preset location; that the target device has a power saving configuration; that the target device supports a power saving configuration; that the target device is a device of a preset type; that the target device has a preset capability; that a moving speed of the target device is less than a preset value; that the target device is in a preset state; that the target device is associated with the preset parameter; that the target device has a power saving information configuration; and that the target device supports the power saving information.

Optionally, the power saving information is specifically used to instruct the target device to perform the target operation on the target resource in a power saving configuration.

Optionally, the power saving information corresponds to at least one power saving configuration.

Optionally, the power saving information includes first power saving information, second power saving information, or third power saving information, where the first power saving information corresponds to at least one first-type power saving configuration, the second power saving information corresponds to at least one second-type power saving configuration, the third power saving information corresponds to at least one power saving configuration in target power saving configurations, and the target power saving configurations include the first-type power saving configuration and the second-type power saving configuration.

Optionally, power saving information corresponding to power saving configurations of different types meets at least one of the following:
that types of the power saving information are different;
that resources of the power saving information are different;
that manners of determining the resources of the power saving information are different; and
that sequences, channels, signals, or signaling of the resources of the power saving information is different.

Optionally, the transmission control apparatus further includes a first execution module, and the first execution module is configured to perform at least one of the following:
before a next piece of power saving information is received or sent, performing the target operation indicated by the currently received power saving information; and
performing, within a first preset time period, the target operation indicated by the currently received power saving information.

Optionally, the performing the target operation includes any one of the following:
performing the target operation within a first preset time period;
performing the target operation within an inactive time in a power saving configuration corresponding to the power saving information and/or an active time in the power saving configuration corresponding to the power saving information; and
performing the target operation within the inactive time in the power saving configuration corresponding to the power saving information.

Optionally, the first preset time period includes at least one of the following defined time:
at least one time unit;
at least one active time in the power saving configuration; and
at least one inactive time in the power saving configuration.

Optionally, the time unit includes at least one of the following: a slot, a slot group, a mini-slot, a mini-slot group, a symbol, a symbol group, a subframe, a subframe group, a frame, a frame group, preset duration, a channel occupancy time, and a measurement window length.

Optionally, the preset duration is duration corresponding to at least one of the following: a periodicity of the candidate resource of the power saving information, a periodicity of the first resource, a periodicity of a synchronization resource, a periodicity of a discovery resource, a periodicity of a control resource, a periodicity of a data resource, a periodicity of a feedback resource, a periodicity of a measurement resource, a service periodicity, a periodicity of a data packet, a power saving configuration periodicity, a periodicity of a resource pool, a periodicity of a search space, a sensing step, a sensing periodicity, a sensing window length, a selection window length, a periodicity of a reference signal, and a reservation periodicity.

Optionally, the power saving information is further used to indicate a transmission direction of at least one of the first device and the second device.

Optionally, a target object associated with the target operation includes any one of the following:
a first transmission object, where the first transmission object is a transmission object associated with at least one of a preset transmission, a preset connection, a first preset device, and a preset power saving configuration;
a second transmission object, where the second transmission object is a transmission object other than the first transmission object;
a third transmission object, where the third transmission object is any transmission object;
a fourth transmission object, where the fourth transmission object is associated with a preset parameter; and
a fifth transmission object, where the fifth transmission object is associated with preset information, where
the preset information includes at least one of content included in the power saving information, the first resource, and a resource that can be used for the power saving information.

Optionally, the preset parameter includes a related identifier of a second preset device, and the second preset device includes at least one of the following:
a device corresponding to at least one of a first device identifier, a first source device identifier, a first destination device identifier, a first group identifier, and a first member identifier; and
a device that is in a group different from a group of the first device and/or the second device.

Optionally, the fifth transmission object is a transmission object determined according to an association relationship between the preset information and the preset parameter and an association relationship between the preset parameter and the transmission object; or
the fifth transmission object is a transmission object determined according to an association relationship between the preset information and the transmission object.

Optionally, the target object associated with the target operation meets at least one of the following:
in a case that the power saving information is first power saving information, that the target object is the first transmission object;
in a case that the power saving information is second power saving information, that the target object is the second transmission object or the third transmission object; and
in a case that the power saving information is third power saving information, that the target object is the third transmission object, where
the first power saving information corresponds to at least one first-type power saving configuration, the second power saving information corresponds to at least one second-type power saving configuration, the third power saving information corresponds to at least one power saving configuration in target power saving configurations, and the target power saving configurations include the first-type power saving configuration and the second-type power saving configuration.

Optionally, the first determining module 901 is specifically configured to determine, according to a preset parameter, the first resource that carries the power saving information.

Optionally, the power saving information is further used to indicate at least one of the following:
at least one resource set associated with the target object; and
at least one resource set that needs to be switched to, where
the resource set includes a preset resource pool, a preset bandwidth part, or a preset carrier.

Optionally, it is determined, when at least one of the following is met, that the power saving information is received:
that the power saving information is sensed;
that the power saving information is received;
that a measurement result of the power saving information meets a first preset condition; and
that a measurement result of the first resource meets the first preset condition.

Optionally, the first determining module 901 is specifically configured to determine a behavior of the first device according to a third preset condition or a preset parameter, where
the behavior of the first device includes at least one of the following:
not sensing the power saving information;
ignoring the power saving information; and
determining that content indicated by the power saving information is invalid; and
determining that the power saving information indicates preset content.

Optionally, the third preset condition includes at least one of the following: that the target device has geographic location information; that the target device is in a preset location; that the target device has distance information; that a distance between the first device and the second device is within a preset distance range; that the first device and the second device are in a same or adjacent geographic range; that the target device has a power saving configuration; that the target device supports a power saving configuration; that the target device is a device of a preset type; that the target device has a preset capability; that a moving speed of the target device is less than a preset value; that the target device is in a preset state; that the target device is associated with the preset parameter; that the target device has a power saving information configuration; and that the target device supports the power saving information.

Optionally, the preset parameter includes at least one of the following: a maximum transmit power, a target transmit power, a power factor, a path loss, a path loss factor, a quantity of electricity, an interference degree, a power saving configuration identifier, a periodicity of a power saving configuration, active duration of the power saving configuration, inactive duration of the power saving configuration, a power saving configuration type, a power saving information type, the target operation, the target object, a related identifier of user equipment, an identifier of a first object, a transmission direction, zone information, distance information, a priority, a related parameter of the first preset condition, a type of the user equipment, a capability of the user equipment, a moving speed of the user equipment, a state of the user equipment, geographic location information of the user equipment, a transmission type, and a transmission state.

Optionally, the first preset condition is a condition for determining, based on the power saving information or a measurement result of the first resource, that the power saving information is received.

Optionally, the first object includes at least one of the following: a connection, a group, a service, a quality of service, a flow, a radio bearer, a resource pool, a bandwidth part, and a carrier.

Optionally, each preset parameter is associated with at least one of the following: a time domain resource for transmitting the power saving information, a frequency domain resource for transmitting the power saving information, a code domain resource for transmitting the power saving information, and content included in the target information.

Optionally, it is determined, when at least one of the following is met, that the power saving information needs to be received:
determining that a sixth transmission object needs to be sent, where the sixth transmission object includes data, a data packet, a transport block, or a Medium Access Control protocol data unit;
determining that the sixth transmission object needs to be sent and at least one device related to the sixth transmission object is in a sleep state;
determining that the sixth transmission object needs to be sent to the second device and the first device and/or the second device are/is in a sleep state;
determining that the at least one device related to the sixth transmission object received the power saving information;
determining that no sixth transmission object needs to be sent;
determining that no sixth transmission object needs to be sent and the at least one device related to the sixth transmission object is in an active state;
determining that no sixth transmission object needs to be sent to the second device and the first device and/or the second device are/is in an active state;
determining that a measurement result of the power saving information meets a fourth preset condition;
determining that the first resource meets the fourth preset condition;
determining that the sixth transmission object needs to be received, where the sixth transmission object includes data, a data packet, a transport block, or a Medium Access Control protocol data unit;
determining that the sixth transmission object needs to be received and the at least one device related to the sixth transmission object is in a sleep state;
determining that there is the sixth transmission object sent by the second device and the first device and/or the second device are/is in a sleep state;
determining that the at least one device related to the sixth transmission object sends the power saving information;
determining that no sixth transmission object needs to be received;
determining that no sixth transmission object needs to be received and the at least one device related to the sixth transmission object is in an active state;
determining that there is no sixth transmission object sent by the second device and the target device is in an active state; and
that the first resource meets a first preset condition.

Optionally, the first preset condition includes at least one of the following: that N1 measurement results are greater than a first threshold, that N2 measurement results are less than a second threshold, that all N3 measurement results are in a first range, and that all N4 measurement results are outside a second range, where N1, N2, N3, and N4 are positive integers.

Optionally, the fourth preset condition includes at least one of the following: that M1 measurement results are greater than a third threshold, that M2 measurement results are less than a fourth threshold, that all M3 measurement results are in a third range, and that all M4 measurement results are outside a fourth range, where M1, M2, M3, and M4 are positive integers.

Optionally, the power saving information includes at least one of a power saving signal, a power saving sequence, a power saving channel, and power saving signaling.

The transmission control apparatus provided in this embodiment of this application can implement the processes implemented in the method embodiments in FIG. 2. To avoid repetition, details are not described herein again.

Referring to FIG. 10, FIG. 10 is a structural diagram of a transmission control apparatus according to an embodiment of this application. As shown in FIG. 10, a transmission control apparatus 1000 includes:
a second determining module 1001, configured to determine a first resource; and
a sending module 1002, configured to send power saving information based on the first resource, where
the power saving information is used to instruct a target device to perform a target operation on a target resource, the target device includes at least one of a first device and a second device, the target operation includes wakeup, sleep, activation or deactivation, the target resource includes a sidelink resource, and the first device is a device that receives the power saving information.

Optionally, the power saving information includes indication information, and the indication information is used to indicate the target operation.

Optionally, the second determining module is further configured to perform at least one of the following:
determining the target operation according to a candidate resource of the power saving information;
determining the target operation according to whether a measurement result of the candidate resource of the power saving information meets the first preset condition;
determining the target operation according to the first resource;
determining the target operation according to whether the target device meets a second preset condition; and
determining the target operation according to a value of a preset parameter.

Optionally, the second preset condition includes at least one of the following: that the target device has geographic location information; that the target device has distance information; that a distance between the first device and the second device is within a preset distance range; that the target device is in a preset location; that the target device has a power saving configuration; that the target device supports a power saving configuration; that the target device is a device of a preset type; that the target device has a preset capability; that a moving speed of the target device is less than a preset value; that the target device is in a preset state; that the target device is associated with the preset parameter; that the target device has a power saving information configuration; and that the target device supports the power saving information.

Optionally, the power saving information is specifically used to instruct the target device to perform the target operation on the target resource in a power saving configuration.

Optionally, the power saving information corresponds to at least one power saving configuration.

Optionally, the power saving information includes first power saving information, second power saving information, or third power saving information, where the first power saving information corresponds to at least one first-type power saving configuration, the second power saving information corresponds to at least one second-type power saving configuration, the third power saving information corresponds to at least one power saving configuration in target power saving configurations, and the target power saving configurations include the first-type power saving configuration and the second-type power saving configuration.

Optionally, power saving information corresponding to power saving configurations of different types meets at least one of the following:
that types of the power saving information are different;
that resources of the power saving information are different;
that manners of determining the resources of the power saving information are different; and
that sequences, channels, signals, or signaling of the resources of the power saving information is different.

Optionally, the transmission control apparatus 1000 further includes a second execution module, and the second execution module is configured to perform at least one of the following:
before a next piece of power saving information is received or sent, performing the target operation indicated by the currently received power saving information; and
performing, within a first preset time period, the target operation indicated by the currently received power saving information. Optionally, the performing the target operation includes any one of the following:
   performing the target operation within a first preset time period;
   performing the target operation within an inactive time in a power saving configuration corresponding to the power saving information and/or an active time in the power saving configuration corresponding to the power saving information; and
   performing the target operation within the inactive time in the power saving configuration corresponding to the power saving information.

Optionally, the first preset time period includes at least one of the following defined time:
at least one time unit;
at least one active time in the power saving configuration; and
at least one inactive time in the power saving configuration.

Optionally, the time unit includes at least one of the following: a slot, a slot group, a mini-slot, a mini-slot group, a symbol, a symbol group, a subframe, a subframe group, a frame, a frame group, preset duration, a channel occupancy time, and a measurement window length.

Optionally, the preset duration is duration corresponding to at least one of the following: a periodicity of the candidate resource of the power saving information, a periodicity of the first resource, a periodicity of a discovery resource, a periodicity of a synchronization resource, a periodicity of a control resource, a periodicity of a data resource, a periodicity of a feedback resource, a periodicity of a measurement resource, a service periodicity, a periodicity of a data packet, a power saving configuration periodicity, a periodicity of a resource pool, a periodicity of a search space, a sensing step, a sensing periodicity, a sensing window length, a selection window length, a periodicity of a reference signal, and a reservation periodicity.

Optionally, the power saving information is further used to indicate a transmission direction of at least one of the first device and the second device.

Optionally, a target object associated with the target operation includes any one of the following:
a first transmission object, where the first transmission object is a transmission object associated with at least one of a preset transmission, a preset connection, a first preset device, and a preset power saving configuration;
a second transmission object, where the second transmission object is a transmission object other than the first transmission object;
a third transmission object, where the third transmission object is any transmission object;
a fourth transmission object, where the fourth transmission object is associated with a preset parameter; and
a fifth transmission object, where the fifth transmission object is associated with preset information, where
the preset information includes at least one of content included in the power saving information, the first resource, and a resource that can be used for the power saving information.

Optionally, the preset parameter includes a related identifier of a second preset device, and the second preset device includes at least one of the following:
a device corresponding to at least one of a first device identifier, a first source device identifier, a first destination device identifier, a first group identifier, and a first member identifier; and
a device that is in a group different from a group of the first device and/or the second device.

Optionally, the fifth transmission object is a transmission object determined according to an association relationship between the preset information and the preset parameter and an association relationship between the preset parameter and the transmission object; or
the fifth transmission object is a transmission object determined according to an association relationship between the preset information and the transmission object.

Optionally, the target object associated with the target operation meets at least one of the following:
in a case that the power saving information is first power saving information, that the target object is the first transmission object;
in a case that the power saving information is second power saving information, that the target object is the second transmission object or the third transmission object; and
in a case that the power saving information is third power saving information, that the target object is the third transmission object, where
the first power saving information corresponds to at least one first-type power saving configuration, the second power saving information corresponds to at least one second-type power saving configuration, the third power saving information corresponds to at least one power saving configuration in target power saving configurations, and the target power saving configurations include the first-type power saving configuration and the second-type power saving configuration.

Optionally, the second determining module 1001 is specifically configured to determine, according to a preset parameter, the first resource that carries the power saving information.

Optionally, the power saving information is further used to indicate at least one of the following:
at least one resource set associated with the target object; and
at least one resource set that needs to be switched to, where
the resource set includes a preset resource pool, a preset bandwidth part, or a preset carrier.

Optionally, the second determining module 1001 is further configured to determine a behavior of the third device according to a third preset condition or a preset parameter, where
the behavior of the third device includes at least one of the following:
not sending the power saving information;
determining that content indicated by the power saving information is invalid; and
determining that the power saving information indicates preset content.

Optionally, the third preset condition includes at least one of the following: that the target device has geographic location information; that the target device is in a preset location; that the target device has distance information; that a distance between the first device and the second device is within a preset distance range; that the first device and the second device are in a same or adjacent geographic range; that the target device has a power saving configuration; that the target device supports a power saving configuration; that the target device is a device of a preset type; that the target device has a preset capability; that a moving speed of the target device is less than a preset value; that the target device is in a preset state; that the target device is associated with the preset parameter; that the target device has a power saving information configuration; and that the target device supports the power saving information.

Optionally, the preset parameter includes at least one of the following: a maximum transmit power, a target transmit power, a power factor, a path loss, a path loss factor, a quantity of electricity, an interference degree, a power saving configuration identifier, a periodicity of a power saving configuration, active duration of the power saving configuration, inactive duration of the power saving configuration, a power saving configuration type, a power saving information type, the target operation, the target object, a related identifier of user equipment, an identifier of a first object, a transmission direction, zone information, distance information, a priority, a related parameter of the first preset condition, a type of the user equipment, a capability of the user equipment, a moving speed of the user equipment, a state of the user equipment, geographic location information of the user equipment, a transmission type, and a transmission state.

Optionally, the first preset condition is a condition for determining, based on the power saving information or a measurement result of the first resource, that the power saving information is received.

Optionally, the first object includes at least one of the following: a connection, a group, a service, a quality of service, a flow, a radio bearer, a resource pool, a bandwidth part, and a carrier.

Optionally, the first preset condition includes any one of the following: that N1 measurement results are greater than a first threshold, that N2 measurement results are less than a second threshold, that all N3 measurement results are in a first range, and that all N4 measurement results are outside a second range, where N1, N2, N3, and N4 are positive integers.

Optionally, each preset parameter is associated with at least one of the following: a time domain resource for transmitting the power saving information, a frequency domain resource for transmitting the power saving information, a code domain resource for transmitting the power saving information, and content included in the target information.

Optionally, it is determined, when at least one of the following is met, that the power saving information needs to be sent:
determining that a sixth transmission object needs to be sent, where the sixth transmission object includes data, a data packet, a transport block, or a Medium Access Control protocol data unit;
determining that the sixth transmission object needs to be sent and at least one device related to the sixth transmission object is in a sleep state;
determining that the sixth transmission object needs to be sent to the second device and the first device and/or the second device are/is in a sleep state;
determining that the at least one device related to the sixth transmission object received the power saving information;
determining that no sixth transmission object needs to be sent;
determining that no sixth transmission object needs to be sent and the at least one device related to the sixth transmission object is in an active state;
determining that no sixth transmission object needs to be sent to the second device and the first device and/or the second device are/is in an active state;
determining that a measurement result of the power saving information meets a fourth preset condition; and
determining that the first resource meets the fourth preset condition.

Optionally, the fourth preset condition includes at least one of the following: that M1 measurement results are greater than a third threshold, that M2 measurement results are less than a fourth threshold, that all M3 measurement results are in a third range, and that all M4 measurement results are outside a fourth range, where M1, M2, M3, and M4 are positive integers.

Optionally, the power saving information includes at least one of a power saving signal, a power saving sequence, a power saving channel, and power saving signaling.

The transmission control apparatus provided in this embodiment of this application can implement the processes in the method embodiments in FIG. 8. To avoid repetition, details are not described herein again.

The transmission control apparatus in this embodiment of this application may be an apparatus, or may be a component, an integrated circuit, or a chip in user equipment. The apparatus may be a mobile terminal, or a non-mobile terminal. For example, the mobile terminal may include but is not limited to the types of the foregoing listed user equipment, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The transmission control apparatus in this embodiment of this application may be an apparatus with an operating system. The operating system may be an Android (Android) operating system, an iOS operating system, or another possible operating system. This is not specifically limited in the embodiments of this application.

The transmission control apparatus provided in this embodiment of this application can implement the processes implemented in the method embodiments in FIG. 2 to FIG. 7, and achieve a same technical effect. To avoid repetition, details are not described herein again.

Optionally, as shown in FIG. 11, an embodiment of this application further provides a communications device 1100, including a processor 1101, a memory 1102, and a program or an instruction that is stored in the memory 1102 and that can be executed on the processor 1101. For example, when the communications device 1100 is user equipment, the program or the instruction is executed by the processor 1101 to implement the processes of the foregoing transmission control method embodiment, and a same technical effect can be achieved. When the communications device 1100 is a network side device, the program or the instruction is executed by the processor 1101 to implement the processes of the foregoing transmission control method embodiment, and a same technical effect can be achieved. To avoid repetition, details are not described herein again.

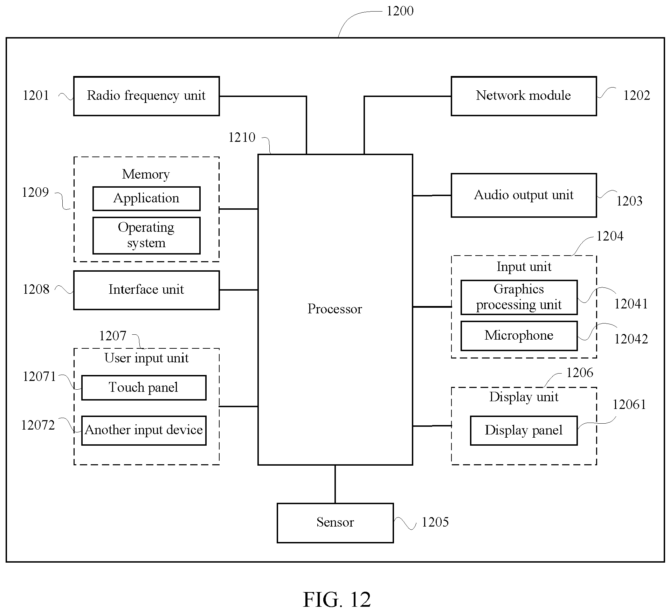

FIG. 12 is a schematic structural diagram of hardware of a communications device according to the embodiments of this application.

A communications device 1200 includes but is not limited to components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art can understand that the communications device 1200 may further include a power supply (such as a battery) that supplies power to each component. The power supply may be logically connected to the processor 1210 by using a power supply management system, to implement functions such as charging and discharging management, and power consumption management by using the power supply management system. The structure of the communications device shown in FIG. 12 does not constitute a limitation on the communications device. The communications device may include components more or fewer than those shown in the diagram, a combination of some components, or different component arrangements. Details are not described herein.

It should be understood that, in this embodiment of this application, the input unit 1204 may include a graphics processing unit (Graphics Processing Unit, GPU) 12041 and a microphone 12042, and the graphics processing unit 12041 processes image data of a still picture or a video obtained by an image capture apparatus (such as a camera) in a video capture mode or an image capture mode. The display unit 1206 may include a display panel 12061. Optionally, the display panel 12061 may be configured in a form such as a liquid crystal display or an organic light-emitting diode. The user input unit 1207 includes a touch panel 12071 and another input device 12072. The touch panel 12071 is also referred to as a touchscreen. The touch panel 12071 may include two parts: a touch sensing apparatus and a touch controller. Another input device 12072 may include but is not limited to a physical keyboard, a functional button (such as a volume control button or a power on/off button), a trackball, a mouse, and a joystick. Details are not described herein.

In this embodiment of this application, the radio frequency unit 1201 receives downlink data from a network device and then sends the downlink data to the processor 1210 for processing; and sends uplink data to the network device. Usually, the radio frequency unit 1201 includes but is not limited to an antenna, at least one amplifier, a transceiver, a coupler, a low noise amplifier, a duplexer, and the like.

The memory 1209 may be configured to store a software program or an instruction and various data. The memory 109 may mainly include a program or instruction storage zone and a data storage zone. The program or instruction storage zone may store an operating system, and an application or an instruction required by at least one function (for example, a sound playing function or an image playing function). In addition, the memory 1209 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 1210 may include one or more processing units. Optionally, an application processor and a modem processor may be integrated into the processor 1210. The application processor mainly processes an operating system, a user interface, an application, an instruction, or the like. The modem processor mainly processes wireless communications, for example, a baseband processor. It can be understood that, alternatively, the modem processor may not be integrated into the processor 1210.

The processor 1210 is configured to determine a first resource; and
the radio frequency unit 1201 is configured to receive power saving information based on the first resource, where
the power saving information is used to instruct a target device to perform a target operation on a target resource, the target device includes at least one of the first device and a second device, the target operation includes wakeup, sleep, activation or deactivation, and the target resource includes a sidelink resource.

Alternatively, the processor 1210 is configured to determine a first resource; and
the radio frequency unit 1201 is configured to send power saving information based on the first resource, where
the power saving information is used to instruct a target device to perform a target operation on a target resource, the target device includes at least one of a first device and a second device, the target operation includes wakeup, sleep, activation or deactivation, the target resource includes a sidelink resource, and the first device is a device that receives the power saving information.

It should be understood that, in this embodiment, the processor 1210 and the radio frequency unit 1201 can implement the processes implemented by the communications device in the method embodiment in FIG. 2 or FIG. 7. To avoid repetition, details are not described herein again.

An embodiment of this application further provides a readable storage medium. The readable storage medium stores a program or an instruction, and when the program or the instruction is executed by a processor, the processes of the foregoing transmission control method embodiment are implemented and a same technical effect can be achieved. To avoid repetition, details are not described herein again.

The processor is a processor in the electronic device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communications interface, the communications interface is coupled to the processor, and the processor is configured to execute a program or an instruction of a network device to implement the processes of the foregoing transmission control method embodiment and a same technical effect can be achieved. To avoid repetition, details are not described herein again.

It should be understood that the chip mentioned in this embodiment of this application may also be referred to as a system-level chip, a system chip, a chip system, or an on-chip system chip.

It should be noted that, in this application, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a communications device (which may be mobile phone, a computer, a server, a base station, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A transmission control method, performed by a first device and comprising:
determining a first resource; and
receiving power saving information based on the first resource, wherein
the power saving information is used to instruct a target device to perform a target operation on a target resource, the target device comprises at least one of the first device and a second device, the target operation comprises wakeup, sleep, activation or deactivation, and the target resource comprises a sidelink resource.

2. The method according to claim 1, wherein the power saving information comprises indication information, and the indication information is used to indicate the target operation.

3. The method according to claim 1, wherein after the receiving the power saving information based on the first resource, the method further comprises at least one of following:
determining the target operation according to a candidate resource of the power saving information;
determining the target operation according to whether the power saving information is sensed;
determining the target operation according to whether the power saving information is received;
determining the target operation according to whether a measurement result of the power saving information meets a first preset condition;
determining the target operation according to whether a measurement result of the candidate resource of the power saving information meets the first preset condition;
determining the target operation according to the first resource;
determining the target operation according to whether the target device meets a second preset condition; and
determining the target operation according to a preset parameter.

4. The method according to claim 3, wherein the second preset condition comprises at least one of following:
that the target device has geographic location information;
that the target device has distance information;
that a distance between the first device and the second device is within a preset distance range;
that the target device is in a preset location;
that the target device has a power saving configuration;
that the target device supports a power saving configuration;
that the target device is a device of a preset type;
that the target device has a preset capability;
that a moving speed of the target device is less than a preset value;
that the target device is in a preset state;
that the target device is associated with the preset parameter;
that the target device has a power saving information configuration; and
that the target device supports the power saving information.

5. The method according to claim 1, wherein the power saving information is specifically used to instruct the target device to perform the target operation on the target resource in a power saving configuration.

6. The method according to claim 5, wherein the power saving information corresponds to at least one power saving configuration.

7. The method according to claim 6, wherein the power saving information comprises first power saving information, second power saving information, or third power saving information, wherein the first power saving information corresponds to at least one first-type power saving configuration, the second power saving information corresponds to at least one second-type power saving configuration, the third power saving information corresponds to at least one power saving configuration in target power saving configurations, and the target power saving configurations comprise the first-type power saving configuration and the second-type power saving configuration.

8. The method according to claim 5 or 7, wherein power saving information corresponding to power saving configurations of different types meets at least one of following:
that types of the power saving information are different;
that resources of the power saving information are different;
that manners of determining the resources of the power saving information are different; and
that sequences, channels, signals, or signaling of the resources of the power saving information are different.

9. The method according to claim 1, wherein after the receiving the power saving information based on the first resource, the method further comprises at least one of following:
before a next piece of power saving information is received or sent, performing the target operation indicated by a currently received power saving information; and
performing, within a first preset time period, the target operation indicated by the currently received power saving information.

10. The method according to claim 1, wherein the performing the target operation comprises any one of following:
performing the target operation within a first preset time period;
performing the target operation within an inactive time in a power saving configuration corresponding to the power saving information and/or an active time in the power saving configuration corresponding to the power saving information; and
performing the target operation within the inactive time in the power saving configuration corresponding to the power saving information.

11. The method according to claim 9 or 10, wherein the first preset time period comprises at least one of following defined time:
at least one time unit;
at least one active time in the power saving configuration; and
at least one inactive time in the power saving configuration.

12. The method according to claim 1, wherein the power saving information is further used to indicate a transmission direction of at least one of the first device and the second device.

13. The method according to claim 1, wherein a target object associated with the target operation comprises any one of following:
a first transmission object, wherein the first transmission object is a transmission object associated with at least one of a preset transmission, a preset connection, a first preset device, and a preset power saving configuration;
a second transmission object, wherein the second transmission object is a transmission object other than the first transmission object;
a third transmission object, wherein the third transmission object is any transmission object;
a fourth transmission object, wherein the fourth transmission object is associated with a preset parameter; and
a fifth transmission object, wherein the fifth transmission object is associated with preset information, wherein
the preset information comprises at least one of content comprised in the power saving information, the first resource, and a resource that can be used for the power saving information.

14. The method according to claim 13, wherein the preset parameter comprises a related identifier of a second preset device, and the second preset device comprises at least one of following:
a device corresponding to at least one of a first device identifier, a first source device identifier, a first destination device identifier, a first group identifier, and a first member identifier; and
a device that is in a group different from a group of the first device and/or the second device.

15. The method according to claim 13, wherein the fifth transmission object is a transmission object determined by an association relationship between the preset information and the preset parameter and an association relationship between the preset parameter and a transmission object; or
the fifth transmission object is a transmission object determined according to an association relationship between the preset information and a transmission object.

16. The method according to claim 13, wherein the target object associated with the target operation meets at least one of following:
in a case that the power saving information is first power saving information, that the target object is the first transmission object;
in a case that the power saving information is second power saving information, that the target object is the second transmission object or the third transmission object; and
in a case that the power saving information is third power saving information, that the target object is the third transmission object, wherein
the first power saving information corresponds to at least one first-type power saving configuration, the second power saving information corresponds to at least one second-type power saving configuration, the third power saving information corresponds to at least one power saving configuration in target power saving configurations, and the target power saving configurations comprise the first-type power saving configuration and the second-type power saving configuration.

17. The method according to claim 1, wherein the determining the first resource comprises:
determining, according to a preset parameter, the first resource that carries the power saving information.

18. The method according to claim 1, wherein the power saving information is further used to indicate at least one of following:
at least one resource set associated with the target object; and
at least one resource set that needs to be switched to, wherein
the resource set comprises a preset resource pool, a preset bandwidth part, or a preset carrier.

19. The method according to claim 1, wherein it is determined, in a case that at least one of following is met, that the power saving information is received:
that the power saving information is sensed;
that the power saving information is received;
that a measurement result of the power saving information meets a first preset condition; and
that a measurement result of the first resource meets the first preset condition.

20. The method according to claim 1, further comprising:
determining a behavior of the first device according to a third preset condition or a preset parameter, wherein
the behavior of the first device comprises at least one of following:
not sensing the power saving information;
ignoring the power saving information;
determining that content indicated by the power saving information is invalid; and
determining that the power saving information indicates preset content.

21. The method according to claim 20, wherein the third preset condition comprises at least one of following:
that the target device has geographic location information;
that the target device is in a preset location;
that the target device has distance information;
that a distance between the first device and the second device is within a preset distance range;
that the first device and the second device are in a same or adjacent geographic range;
that the target device has a power saving configuration;
that the target device supports a power saving configuration;
that the target device is a device of a preset type;
that the target device has a preset capability;
that a moving speed of the target device is less than a preset value;
that the target device is in a preset state;
that the target device is associated with the preset parameter;
that the target device has a power saving information configuration; and
that the target device supports the power saving information.

22. The method according to claim 3, 13, 17, or 20, wherein the preset parameter comprises at least one of following: a maximum transmit power, a target transmit power, a power factor, a path loss, a path loss factor, a quantity of electricity, an interference degree, a power saving configuration identifier, a power saving configuration periodicity, active duration of the power saving configuration, inactive duration of the power saving configuration, a power saving configuration type, a power saving information type, the target operation, the target object, a related identifier of user equipment, an identifier of a first object, a transmission direction, zone information, distance information, a priority, a related parameter of the first preset condition, a type of the user equipment, a capability of the user equipment, a moving speed of the user equipment, a state of the user equipment, geographic location information of the user equipment, a transmission type, and a transmission state.

23. The method according to claim 22, wherein the first preset condition is a condition for determining, based on the power saving information or a measurement result of the first resource, that the power saving information is received.

24. The method according to claim 3, 13, 17, or 20, wherein each preset parameter is associated with at least one of following: a time domain resource for transmitting the power saving information, a frequency domain resource for transmitting the power saving information, a code domain resource for transmitting the power saving information, and content comprised in the target information.

25. The method according to claim 1, wherein it is determined, in a case that at least one of following is met, that the power saving information needs to be received:
determining that a sixth transmission object needs to be sent, wherein the sixth transmission object comprises data, a data packet, a transport block, or a Medium Access Control protocol data unit;
determining that the sixth transmission object needs to be sent and at least one device related to the sixth transmission object is in a sleep state;
determining that the sixth transmission object needs to be sent to the second device and the first device and/or the second device are/is in a sleep state;
determining that the at least one device related to the sixth transmission object received the power saving information;
determining that no sixth transmission object needs to be sent;
determining that no sixth transmission object needs to be sent and the at least one device related to the sixth transmission object is in an active state;
determining that no sixth transmission object needs to be sent to the second device and the first device and/or the second device are/is in an active state;
determining that a measurement result of the power saving information meets a fourth preset condition;
determining that the first resource meets the fourth preset condition;
determining that the sixth transmission object needs to be received, wherein the sixth transmission object comprises data, a data packet, a transport block, or a Medium Access Control protocol data unit;
determining that the sixth transmission object needs to be received and the at least one device related to the sixth transmission object is in a sleep state;
determining that there is the sixth transmission object sent by the second device and the first device and/or the second device are/is in a sleep state;
determining that the at least one device related to the sixth transmission object sends the power saving information;
determining that no sixth transmission object needs to be received;
determining that no sixth transmission object needs to be received and the at least one device related to the sixth transmission object is in an active state;
determining that there is no sixth transmission object sent by the second device and the target device is in an active state; and
that the first resource meets a first preset condition.

26. The method according to claim 3, 19, or 25, wherein the first preset condition comprises at least one of following: that N1 measurement results are greater than a first threshold, that N2 measurement results are less than a second threshold, that all N3 measurement results are in a first range, and that all N4 measurement results are outside a second range, wherein N1, N2, N3, and N4 are positive integers.

27. The method according to claim 25, wherein the fourth preset condition comprises at least one of following: that M1 measurement results are greater than a third threshold, that M2 measurement results are less than a fourth threshold, that all M3 measurement results are in a third range, and that all M4 measurement results are outside a fourth range, wherein M1, M2, M3, and M4 are positive integers.

28. A transmission control method, performed by a third device and comprising:
determining a first resource; and
sending power saving information based on the first resource, wherein
the power saving information is used to instruct a target device to perform a target operation on a target resource, the target device comprises at least one of a first device and a second device, the target operation comprises wakeup, sleep, activation or deactivation, the target resource comprises a sidelink resource, and the first device is a device that receives the power saving information.

29. The method according to claim 28, wherein before the sending the power saving information based on the first resource, the method further comprises at least one of following:
determining the target operation according to a candidate resource of the power saving information;
determining the target operation according to whether a measurement result of the candidate resource of the power saving information meets a first preset condition;
determining the target operation according to the first resource;
determining the target operation according to whether the target device meets a second preset condition; and
determining the target operation according to a value of a preset parameter.

30. The method according to claim 28, wherein the power saving information is specifically used to instruct the target device to perform the target operation on the target resource in a power saving configuration.

31. The method according to claim 30, wherein the power saving information corresponds to at least one power saving configuration.

32. The method according to claim 31, wherein the power saving information comprises first power saving information, second power saving information, or third power saving information, wherein the first power saving information corresponds to at least one first-type power saving configuration, the second power saving information corresponds to at least one second-type power saving configuration, the third power saving information corresponds to at least one power saving configuration in target power saving configurations, and the target power saving configurations comprise the first-type power saving configuration and the second-type power saving configuration.

33. The method according to claim 30 or 32, wherein power saving information corresponding to power saving configurations of different types meets at least one of following:
that types of the power saving information are different;
that resources of the power saving information are different;
that manners of determining the resources of the power saving information are different; and
that sequences, channels, signals, or signaling of the resources of the power saving information are different.

34. The method according to claim 28, wherein after the sending the power saving information based on the first resource, the method further comprises at least one of following:
before a next piece of power saving information is received or sent, performing the target operation indicated by a currently received power saving information; and
performing, within a first preset time period, the target operation indicated by the currently received power saving information.

35. The method according to claim 28, wherein the performing the target operation comprises any one of following:
performing the target operation within a first preset time period;
performing the target operation within an inactive time in a power saving configuration corresponding to the power saving information and/or an active time in the power saving configuration corresponding to the power saving information; and
performing the target operation within the inactive time in the power saving configuration corresponding to the power saving information.

36. The method according to claim 34 or 35, wherein the first preset time period comprises at least one of following defined time:
at least one time unit;
at least one active time in the power saving configuration; and
at least one inactive time in the power saving configuration.

37. The method according to claim 28, wherein the power saving information is further used to indicate a transmission direction of at least one of the first device and the second device.

38. The method according to claim 28, wherein a target object associated with the target operation comprises any one of following:
a first transmission object, wherein the first transmission object is a transmission object associated with at least one of a preset transmission, a preset connection, a first preset device, and a preset power saving configuration;
a second transmission object, wherein the second transmission object is a transmission object other than the first transmission object;
a third transmission object, wherein the third transmission object is any transmission object;
a fourth transmission object, wherein the fourth transmission object is associated with a preset parameter; and
a fifth transmission object, wherein the fifth transmission object is associated with preset information, wherein
the preset information comprises at least one of content comprised in the power saving information, the first resource, and a resource that can be used for the power saving information.

39. The method according to claim 38, wherein the preset parameter comprises a related identifier of a second preset device, and the second preset device comprises at least one of following:
a device corresponding to at least one of a first device identifier, a first source device identifier, a first destination device identifier, a first group identifier, and a first member identifier; and
a device that is in a group different from a group of the first device and/or the second device.

40. The method according to claim 38, wherein the fifth transmission object is a transmission object determined by an association relationship between the preset information and the preset parameter and an association relationship between the preset parameter and a transmission object; or
the fifth transmission object is a transmission object determined according to an association relationship between the preset information and a transmission object.

41. The method according to claim 28, wherein the determining the first resource comprises:
determining, according to a preset parameter, the first resource that carries the power saving information.

42. The method according to claim 28, wherein the power saving information is further used to indicate at least one of following:
at least one resource set associated with the target object; and
at least one resource set that needs to be switched to, wherein
the resource set comprises a preset resource pool, a preset bandwidth part, or a preset carrier.

43. The method according to claim 28, further comprising:
determining a behavior of the third device according to a third preset condition or a preset parameter, wherein
the behavior of the third device comprises at least one of following:
not sending the power saving information;
determining that content indicated by the power saving information is invalid; and
determining that the power saving information indicates preset content.

44. The method according to claim 28, wherein it is determined, in a case that at least one of following is met, that the power saving information needs to be sent:
determining that a sixth transmission object needs to be sent, wherein the sixth transmission object comprises data, a data packet, a transport block, or a Medium Access Control protocol data unit;
determining that the sixth transmission object needs to be sent and at least one device related to the sixth transmission object is in a sleep state;
determining that the sixth transmission object needs to be sent to the second device and the first device and/or the second device are/is in a sleep state;
determining that the at least one device related to the sixth transmission object received the power saving information;
determining that no sixth transmission object needs to be sent;
determining that no sixth transmission object needs to be sent and the at least one device related to the sixth transmission object is in an active state;
determining that no sixth transmission object needs to be sent to the second device and the first device and/or the second device are/is in an active state;
determining that a measurement result of the power saving information meets a fourth preset condition; and
determining that the first resource meets the fourth preset condition.

45. A transmission control apparatus, comprising:
a first determining module, configured to determine a first resource; and
a receiving module, configured to receive power saving information based on the first resource, wherein
the power saving information is used to instruct a target device to perform a target operation on a target resource, the target device comprises at least one of a first device and a second device, the target operation comprises wakeup, sleep, activation or deactivation, and the target resource comprises a sidelink resource.

46. A transmission control apparatus, comprising:
a second determining module, configured to determine a first resource; and
a sending module, configured to send power saving information based on the first resource, wherein
the power saving information is used to instruct a target device to perform a target operation on a target resource, the target device comprises at least one of a first device and a second device, the target operation comprises wakeup, sleep, activation or deactivation, the target resource comprises a sidelink resource, and the first device is a device that receives the power saving information.

47. A communications device, comprising a memory, a processor, and a program stored in the memory and executable on the processor, wherein when the program is executed by the processor, steps of the transmission control method according to any one of claims 1 to 44 are implemented.

48. A readable storage medium, wherein the readable storage medium stores a program or instruction, and when the program or the instruction is executed by a processor, steps of the transmission control method according to any one of claims 1 to 44 are implemented.

49. A chip, wherein the chip comprises a processor and a communications interface, the communications interface is coupled to the processor, and the processor is configured to execute a program or an instruction to implement steps of the transmission control method according to any one of claims 1 to 44.

50. A program product, wherein the program product is executed by at least one processor to implement steps of the transmission control method according to any one of claims 1 to 44.

51. A communications device, configured to perform steps of the transmission control method according to any one of claims 1 to 44.
